# EUROPEAN PATENT APPLICATION

(11) **EP 4 563 666 A1**
(43) Date of publication of application: **04.06.2025**
(21) Application number: 23846346.7
(22) Date of filing: 20.07.2023
(51) Int. Cl.: C09D 133/00, B05D 1/36, B05D 5/00, B05D 7/24, B32B 27/18, C09D 5/00, C09D 7/62, C09D 133/04, C09D 183/04

(54) **PRIMER COMPOSITION AND COATED ARTICLE**

(30) Priority: 26.07.2022 JP 2022118662
(71) Applicant: SHIN-ETSU CHEMICAL CO., LTD., Tokyo 1000005 (JP)
(72) Inventor: YOSHII Ryosuke, Annaka-shi, Gunma 379-0224 (JP); HIGUCHI Koichi, Annaka-shi, Gunma 379-0224 (JP)
(74) Representative: Mewburn Ellis LLP
(86) International application number: PCT/JP2023/026544
(87) International publication number: WO 2024/024615

(57) **Abstract**

Provided is a primer composition that contains:
(A) a copolymer (A-1) which contains a constituent unit represented by the formula shown below and which does not contain a prescribed ultraviolet radiation-absorbing group 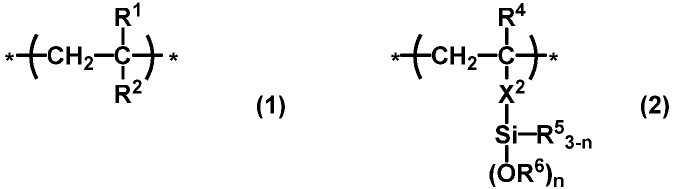 (R¹ denotes a hydrogen atom or the like, R² denotes a monovalent hydrocarbon group or the like, R⁴ denotes a hydrogen atom or the like, R⁵ and R⁶ each denote an alkyl group or the like, X² denotes an alkyleneoxycarbonyl group or the like, n denotes an integer between 1 and 3, and * denotes a bond to an adjacent constituent unit);
a vinyl-based (co)polymer (A-2) which does not contain an alkoxysilyl, does not contain a prescribed ultraviolet radiation-absorbing group, and has a glass transition point of 80°C or higher;
an ultraviolet radiation absorber (B);
a compound (C) having a cyclic hindered amine structure;
inorganic particles (D) having a median diameter of 100 nm or less; and
a solvent (E). The (A-1) : (A-2) mass ratio is 3:1 to 1:3.

## Description

### TECHNICAL FIELD

The present invention relates to a primer composition and a coated article. More specifically, the invention relates to a primer composition which, when coated onto the surface of a plastic or other organic resin substrate and provided thereon with a silicone hardcoat layer or the like, is able to form a film having excellent visible-light transmittance, UV-shielding properties, abrasion resistance and long-term weather resistance, and also relates to a coated article obtained therewith.

### BACKGROUND ART

In recent years, transparent materials that are non-shattering or have a greater shatter resistance than glass have come to be widely used in place of transparent plate glass. For example, because plastic substrates, especially those made of polycarbonate resin or the like, have excellent properties such as transparency, impact resistance and heat resistance, they are used today in place of glass as structural members in a variety of applications, including windows for buildings and vehicles, and instrument covers.

However, the surface properties such as abrasion resistance and weather resistance are inferior to those of glass, and so improvements in the surface properties of polycarbonate resin molded articles are keenly awaited. Recently, there exists a desire for vehicle windows, roadway noise barriers and the like which are capable of withstanding 10 years or more of outdoor exposure.

Means that have been described for improving the weather resistance of polycarbonate molded articles include the method of laminating, for example, an acrylic resin film of excellent weather resistance onto the surface of a polycarbonate substrate, and the method of providing a layer of ultraviolet absorber-containing resin on a resin surface by co-extrusion or the like.

Methods that have been described for improving the abrasion resistance of polycarbonate resin molded articles include methods that involve coating the article with a polyorganosiloxane, melamine or other thermosetting resin, and methods that involve coating the article with a multifunctional acrylic resin that is photocurable.

A known method for producing transparent bodies having both weather resistance and abrasion resistance involves producing a transparent, ultraviolet-absorbing substrate by providing a colloidal silica-containing silicone hardcoat layer over an undercoat layer to which a large amount of ultraviolet absorber has been added.

However, adding a large amount of ultraviolet absorber to the undercoat layer has adverse effects, such as worsening adherence to the substrate or to a silicone hardcoat layer formed on top of the undercoat layer and, when used outdoors for a long period of time, crack formation and clouding or yellowing. An additional problem is that, for reasons having to do with the abrasion resistance, a large amount of ultraviolet absorber cannot be added to the silicone hardcoat layer on top of the undercoat layer.

Patent Documents 1 to 4 report that multilayer laminated resin articles that are imparted with weather resistance while maintaining adherence to the resin substrate can be obtained by using, as a coating ingredient, a copolymer of a benzotriazole-type ultraviolet-absorbing vinyl monomer or benzophenone-type ultraviolet-absorbing vinyl monomer with an alkoxysilyl group-containing vinyl monomer and a vinyl monomer that is copolymerizable with these monomers.

In these patent documents, coated articles imparted with abrasion resistance and weather resistance are obtained by using a copolymer-containing coating as an undercoating agent and forming a silicone hardcoat layer on top of the film thereof. In these coated articles, although the adherence with the silicone hardcoat layer and the weather resistance are considerably improved, in longer term weathering tests, peeling and cracking of the film arise, and so the long-term weather resistance remains unsatisfactory.

Moreover, in the field in question, it is common to use a vinyl copolymer having an ultraviolet absorber chemically attached on side chains. For example, as disclosed in the Comparative Examples of Patent Document 5, the addition of a large amount of ultraviolet absorber that is not chemically attached to a vinyl copolymer reportedly leads to a decrease in interlaminar adhesion, a decrease in abrasion resistance, clouding of the film and worsening of the weather resistance.

### PRIOR ART DOCUMENTS

### PATENT DOCUMENTS

Patent Document 1: JP-A 2001-114841
Patent Document 2: JP-A 2008-120986
Patent Document 3: JP-A 2012-077267
Patent Document 4: JP-A 2016-014132
Patent Document 5: JP-A 2007-231060

### SUMMARY OF INVENTION

### TECHNICAL PROBLEM

In light of these circumstances, one object of this invention is to provide a primer composition capable of forming, on a substrate made of an organic resin or the like, a primer layer which, in combination with, for example, a silicone-based hardcoat layer, is able to impart abrasion resistance, adhesion, and weather resistance that can withstand prolonged outdoor use while maintaining visible-light transmittance. Another object of the invention is to provide a coated article obtained using the primer composition.

### SOLUTION TO PROBLEM

The inventors have conducted intensive investigations aimed at achieving the above objects. As a result, they have discovered that by applying the primer composition described below onto a substrate made of, for example, an organic resin and forming a silicone-based hardcoat layer thereon, a coated article of excellent abrasion resistance, visible-light transmittance, adhesion and weather resistance can be achieved. This discovery ultimately led to the present invention.

Accordingly, the invention provides:
1. A primer composition containing:
   (A) a total of 100 parts by weight of components (A-1) and (A-2) below in a weight ratio (A-1) : (A-2) of from 3:1 to 1:3
      (A-1) a copolymer which includes constitutional units (a) of formula (1) below and constitutional units (b) of formula (2) below, and does not include hydroxyphenyltriazine structures, benzophenone structures and benzotriazole structures 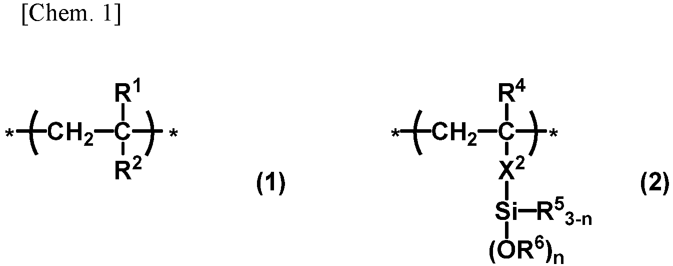 [wherein, in formula (1), R¹ is a hydrogen atom, a halogen atom or a methyl group; R² is a monovalent hydrocarbon group of 1 to 20 carbon atoms which may be substituted with a hydroxyl group, an amino group or an epoxy group and may have an ether bond, a cyano group, an amide group, or a -X¹-R³ group (X¹ being an oxygen atom, a carbonyl group, an oxycarbonyl group or a carbonyloxy group; and R³ being a hydrogen atom or a monovalent hydrocarbon group of 1 to 20 carbon atoms which may be substituted with a hydroxyl group, an amino group or an epoxy group and may have an ether bond),
         in formula (2), R⁴ is a hydrogen atom or a methyl group; R⁵ and R⁶ are each independently a hydrogen atom, an alkyl group of 1 to 10 carbon atoms or an aryl group of 6 to 10 carbon atoms; X² is a single bond, an arylene group of 6 to 10 carbon atoms or an alkyleneoxycarbonyl group of 2 to 12 carbon atoms; and n is an integer from 1 to 3, and
         an asterisk * denotes a bond to a neighboring constitutional unit]
      (A-2) a vinyl (co)polymer which has no alkoxysilyl groups, does not include hydroxyphenyltriazine structures, benzophenone structures and benzotriazole structures, and has a glass transition point of 80°C or more;
   (B) 1 to 30 parts by weight of one or more ultraviolet absorber selected from the group consisting of (B-1) hydroxyphenyltriazine compounds, (B-2) benzophenone compounds and (B-3) benzotriazole compounds;
   (C) 0.5 to 7 parts by weight of a compound having a cyclic hindered amine structure;
   (D) 3 to 20 parts by weight of inorganic particles having a median diameter as measured by the dynamic light scattering method of 100 nm or less; and
   (E) a solvent in an amount such that the solids concentration in the composition is from 1 to 50 wt%;
2. The primer composition of 1 above, wherein the content of constitutional units (b) in component (A-1), based on the total weight of components (A-1) and (A-2), is from 0.2 to 0.6 mmol/g;
3. The primer composition of 1 or 2 above, wherein component (A-1) has a glass transition point of 30°C or below;
4. The primer composition of any of 1 to 3 above, wherein the constitutional units (a) in component (A-1) include constitutional units of formula (3) below and constitutional units of formula (4) below, and the constitutional units (b) in component (A-1) include constitutional units of formula (5) below 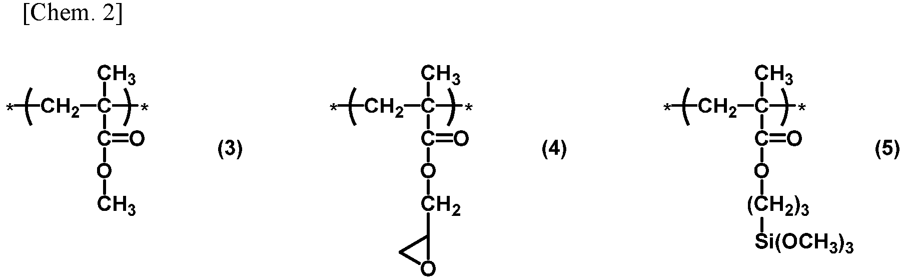 (wherein an asterisk * denotes a bond to a neighboring constitutional unit);
5. The primer composition of any of 1 to 4 above, wherein component (B) includes component (B-1) in an amount of from 1 to 5 parts by weight per 100 parts by weight of components (A-1) and (A-2) combined;
6. The primer composition of any of 1 to 5 above, wherein component (D) includes zinc oxide particles;
7. The primer composition of any of 1 to 6 above, wherein component (D) includes silica particles;
8. A coated article having a substrate and a primer layer composed of a cured film of the primer composition of any of 1 to 7 above formed on at least one side of the substrate, either directly or over one or more other layer, wherein the primer layer has an elastic modulus of 1.5 GPa or more;
9. The coated article of 8 above, further having a silicone hardcoat layer on the primer layer;
10. The coated article of 9 above, wherein the silicone hardcoat layer is a cured film of a silicone hardcoating composition that includes:
   (i) a silicone resin obtained by (co)hydrolytically condensing at least one compound selected from alkoxysilanes of general formula (6) below

      (R⁷)ₘSi(OR⁸)₄₋ₘ (6)

      (wherein each R⁷ is independently a hydrogen atom or a substituted or unsubstituted monovalent hydrocarbon group and a plurality of R⁷ may mutually bond to form a linked group, each R⁸ is independently an alkyl group of 1 to 3 carbon atoms, and m is 0, 1 or 2) and (partial) hydrolytic condensates thereof,
   (ii) colloidal silica,
   (iii) a curing catalyst, and
   (iv) a solvent;
11. The coated article of 10 above, wherein the silicone hardcoating composition further includes (v) an organic ultraviolet absorber;
12. The coated article of 11 above, wherein component (v) is an organic ultraviolet absorber having an alkoxysilyl group;
13. The coated article of 12 above, wherein component (v) is an organic ultraviolet absorber of general formula (7) below 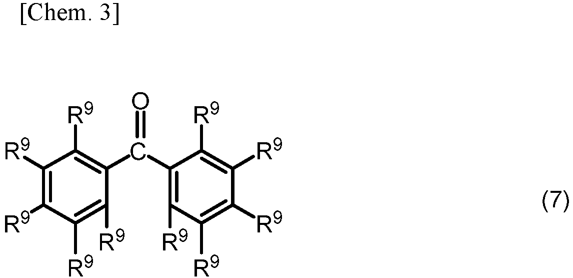
   [wherein each R⁹ is independently a hydrogen atom, a hydroxyl group, an alkyl group of 1 to 5 carbon atoms or a group of general formula (8) below, with at least one occurrence of R⁹ being a group of general formula (8) below

      *-O-(CH₂)-SiR¹⁰ₖ(OR¹¹)₃₋ₖ (8)
   (wherein R¹⁰ and R¹¹ are each independently an alkyl group of 1 to 5 carbon atoms, j is an integer from 1 to 8, k is an integer from 0 to 2, and an asterisk * denotes a bond with a neighboring atom)];
14. The coated article of 10 above, wherein the silicone hardcoating composition further includes (vi) an inorganic ultraviolet absorber;
15. The coated article of 14 above, wherein component (vi) is a core-shell type tetragonal titanium oxide solid solution having cores that are particles of a tin and manganese-doped tetragonal titanium oxide solid solution and having shells of silicon oxide outside the cores, the median diameter of the core-shell type tetragonal titanium oxide solid solution as measured by the dynamic light scattering method is 50 nm or less, the amount of tin in solid solution, expressed as a molar ratio with titanium (Ti/Sn), is from 10 to 1,000, and the amount of manganese in solid solution, expressed as a molar ratio with titanium (Ti/Mn) is from 10 to 1,000; and
16. The coated article of any of 8 to 15 above, wherein the substrate is an organic resin substrate.

### ADVANTAGEOUS EFFECTS OF INVENTION

This invention, in combination with a silicone-based hardcoat layer or the like, is able to impart a substrate made of an organic resin or the like with abrasion resistance, adhesion and weather resistance capable of withstanding long-term outdoor use while maintaining visible-light transmittance, and is therefore well-suited to coating applications for resin members used in vehicle windows, buildings and roadway noise barriers.

### DESCRIPTION OF EMBODIMENTS

The invention is described more fully below.

### <Primer Composition>

The primer composition according to the invention includes components (A) to (E) below:
(A) components (A-1) and (A-2) below
   (A-1) a copolymer which includes constitutional units (a) of formula (1) below and constitutional units (b) of formula (2) below and does not include certain ultraviolet absorbing groups
   (A-2) a vinyl (co)polymer which has no alkoxysilyl groups, does not include certain ultraviolet absorbing groups and has a glass transition point of at least 80°C,
(B) one or more ultraviolet absorber selected from the group consisting of (B-1) hydroxyphenyltriazine compounds, (B-2) benzophenone compounds and (B-3) benzotriazole compounds,
(C) a compound having a cyclic hindered amine structure,
(D) inorganic particles having a median diameter as measured by the dynamic light scattering method of 100 nm or less, and
(E) a solvent.

### [Component (A)]

### [1] Component (A-1)

Component (A-1) is a copolymer which includes constitutional units (a) of formula (1) below and constitutional units (b) of formula (2) below, and does not include certain ultraviolet absorbing groups.

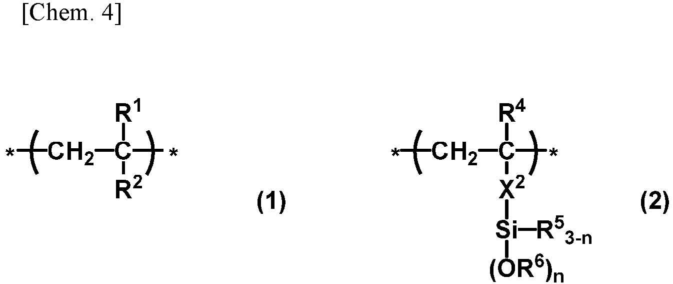

In these formulas, an asterisk * denotes a bond to a neighboring constitutional unit.

### (1) Constitutional Unit (a)

In formula (1), R¹ represents a hydrogen atom, a halogen atom such as a chlorine atom, or a methyl group. A hydrogen atom or a methyl group is preferred.

R² represents a monovalent hydrocarbon group of 1 to 20 carbon atoms which may be substituted with a hydroxyl group, an amino group or an epoxy group and may have an ether bond, a cyano group, an amide group or a -X¹-R³ group (wherein X¹ is an oxygen atom, a carbonyl group, an oxycarbonyl group or a carbonyloxy group; and R³ is a hydrogen atom or a monovalent hydrocarbon group of 1 to 20 carbon atoms which may be substituted with a hydroxyl group, an amino group or an epoxy group and may have an ether bond).

The monovalent hydrocarbon group of R² is exemplified by alkyl groups of 1 to 20 carbon atoms, preferably 1 to 10 carbon atoms, and more preferably 1 to 8 carbon atoms, which may be linear, branched or cyclic; alicyclic hydrocarbon groups of 3 to 20 carbon atoms, preferably 3 to 10 carbon atoms, and more preferably 3 to 8 carbon atoms; aryl groups of 6 to 20 carbon atoms, preferably 6 to 10 carbon atoms; and aralkyl groups of 7 to 20 carbon atoms, preferably 7 to 10 carbon atoms.

Specific examples of the monovalent hydrocarbon group of R² include alkyl groups such as methyl, ethyl, n-propyl, isopropyl, n-butyl, isobutyl, sec-butyl, t-butyl, n-pentyl, isopentyl, n-hexyl, isohexyl, n-heptyl, isoheptyl, 2-ethylhexyl, n-octyl, isooctyl, n-nonyl, isononyl, n-decyl, isodecyl, n-undecyl, n-dodecyl, lauryl, palmityl and stearyl groups;
alicyclic hydrocarbon groups such as cyclohexyl, 4-methylcyclohexyl, 4-t-butylcyclohexyl, isobornyl, dicyclopentanyl and dicyclopentenyloxyethyl groups;
aryl groups such as phenyl, 1-naphthyl and 2-naphthyl groups; and
aralkyl groups such as benzyl and phenethyl groups.

Some or all hydrogen atoms on these groups may be substituted with hydroxyl groups, amino groups, epoxy groups or the like, and may have ether bonds. Specific examples include (poly)ether groups such as 2-methoxyethyl, 2-methoxypropyl, 3-methoxypropyl, 2-methoxybutyl, 3-methoxybutyl, 4-methoxybutyl, methoxypolyethylene glycol groups (the number of ethylene glycol units being preferably, for example, from 2 to 20) and methoxypolypropylene glycol groups (the number of propylene glycol units being preferably, for example, from 2 to 20);
hydroxyalkyl groups such as 2-hydroxyethyl, 2-hydroxypropyl, 3-hydroxypropyl, 2-hydroxybutyl, 3-hydroxybutyl and 4-hydroxybutyl groups;
hydroxypolyether groups such as polyethylene glycol groups (the number of ethylene glycol units being preferably, for example, from 2 to 20) and polypropylene glycol groups (the number of propylene glycol units being preferably, for example, from 2 to 20);
aminoalkyl groups such as 2-aminoethyl, 2-(N-methylamino)ethyl, 2-(N,N-dimethylamino)ethyl, 2-(N-ethylamino)ethyl, 2-(N,N-diethylamino)ethyl, 3-(N,N-dimethylamino)propyl and 4-(N,N-dimethylamino)butyl groups; and
epoxyalkyl groups such as the glycidyl group.

The amide group of R² may have an alkylene group and may have a substituent such as an alkyl group, hydroxyalkyl group or dialkylaminoalkyl group on the nitrogen atom. Specific examples include N-methylamide, N,N-dimethylamide, N-ethylamide, N,N-diethylamide, N-methoxyamide, N,N-dimethoxyamide, N-ethoxyamide, N,N-diethoxyamide, diacetoneamide, N-methylolamide, N-(2-hydroxyethyl)amide, N,N-dimethylaminomethylamide and N-(2-dimethylamino)ethylamide groups.

In the group represented by -X¹-R³, the monovalent hydrocarbon group of 1 to 20 carbon atoms of R³ is exemplified by the same groups as mentioned above for R², and specific examples thereof include the same groups as mentioned above for R².

The group represented by -X¹-R³ is a group that combines X¹ and R³ in any way. Of these, methoxycarbonyl, ethoxycarbonyl, isopropoxycarbonyl, n-butoxycarbonyl, isobutoxycarbonyl, n-hexyloxycarbonyl, 2-ethylhexyloxycarbonyl, isononyloxycarbonyl, lauryloxycarbonyl, cyclohexyloxycarbonyl, 4-methylcyclohexyloxycarbonyl, 4-t-butylcyclohexyloxycarbonyl, isobornyloxycarbonyl, dicyclopentanyloxycarbonyl, dicyclopentenyloxyethyloxycarbonyl and glycidyloxycarbonyl groups are preferred.

The constitutional units (a) represented by formula (1) above are exemplified by units of the following formulas: 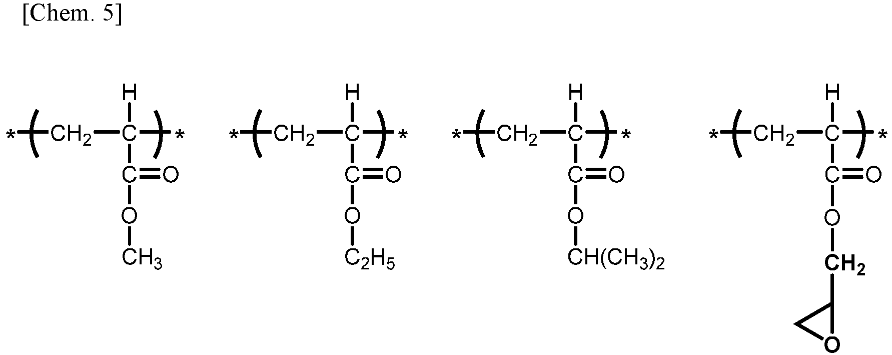 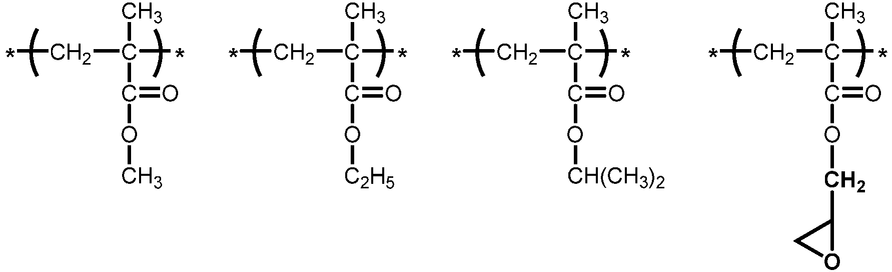 (wherein an asterisk * denotes a bond to a neighboring constitutional unit).

### (2) Constitutional Unit (b)

In formula (2), R⁴ is a hydrogen atom or a methyl group.

R⁵ and R⁶ are each independently a hydrogen atom, an alkyl group of 1 to 10 carbon atoms, preferably 1 to 8 carbon atoms, or an aryl group of 6 to 10 carbon atoms, preferably 6 to 8 carbon atoms.

Specific examples of the alkyl groups of 1 to 10 carbon atoms represented by R⁵ and R⁶ include methyl, ethyl, n-propyl, isopropyl, n-butyl, isobutyl, sec-butyl, t-butyl, n-pentyl, isopentyl, n-hexyl, isohexyl, n-heptyl, isoheptyl, 2-ethylhexyl, n-octyl, isooctyl, n-nonyl, isononyl and n-decyl groups. Methyl and ethyl groups are preferred.

Examples of the aryl groups of 6 to 10 carbon atoms of R⁵ and R⁶ include phenyl, 1-naphthyl and 2-naphthyl groups. Phenyl groups are preferred.

X² represents a single bond, an arylene group of 6 to 10 carbon atoms or an alkyleneoxycarbonyl group of 2 to 12 carbon atoms, preferably 2 to 10 carbon atoms.

The alkyleneoxycarbonyl group of X² is exemplified by groups represented by -CO-O-(CH₂)ᵢ-* (wherein i is an integer from 1 to 11, preferably from 1 to 9, and more preferably from 1 to 3; and the asterisk * denotes a bond to a neighboring silicon atom).

The subscript n is an integer from 1 to 3, and is preferably 3.

The constitutional unit (b) represented by formula (2) above is exemplified by units of the following formulas: 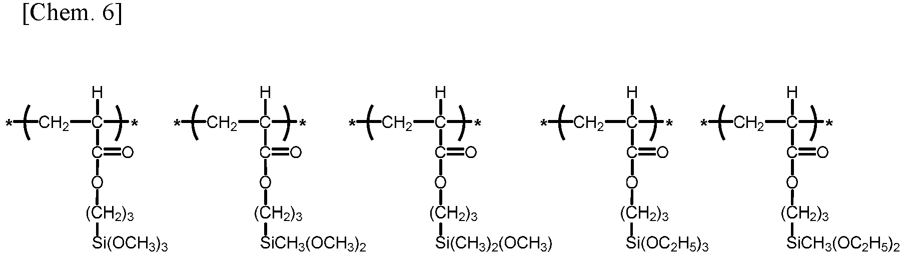 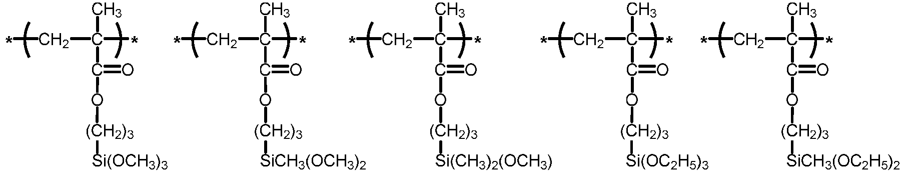 (wherein an asterisk * represents a bond to a neighboring constitutional unit).

In component (A-1), it is especially preferable for the constitutional units (a) to include constitutional units of formula (3) below and constitutional units of formula (4) below, and for the constitutional units (b) to include constitutional units of formula (5) below. 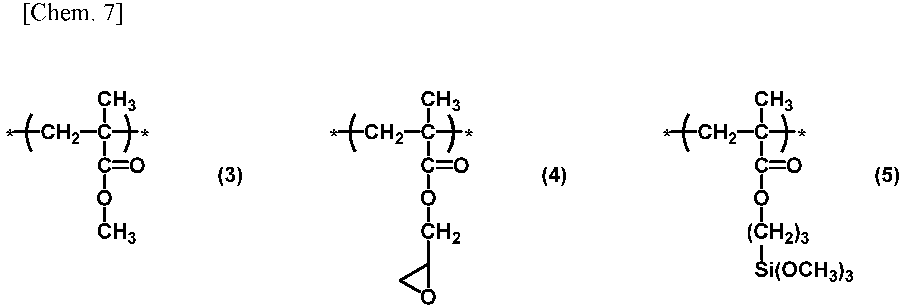 (wherein an asterisk * denotes a bond to a neighboring constitutional unit).

The content of constitutional units (b) in component (A-1) with respect to the total amount of component (A-1) and the subsequently described component (A-2) is preferably from 0.2 to 0.6 mmol/g. Within this range, owing to the presence of alkoxysilyl groups and the like, crosslinks between component (A-1) and with the subsequently described component (D) form, resulting in a better film strength. Moreover, due to reactions with siloxane within the silicone hardcoat layer that forms on the primer layer, the interlaminar adhesion and weather resistance further improve.

The constitutional units included in component (A-1) may be arranged in any order. Component (A-1) may be an alternating copolymer, a random copolymer or a block copolymer.

Component (A-1) has a glass transition point that is preferably 30°C or less, and more preferably 20°C or less. A glass transition point of 30°C or less is preferable because the coating properties and the adherence to the substrate are good.

In this invention, the glass transition point can be measured based on, for example, JIS-K7121: 2012. Generally, given that polymer phase transitions take place in the following order: liquid → rubbery state → glassy state, the glass transition temperature, which is the temperature at which transition from a rubbery state to a glassy state, occurs is a lower temperature than the melting point, which is the temperature at which transition from a liquid to a rubbery state occurs. Therefore, in cases where the copolymer is in a liquid state at a temperature of 30°C or less (melting point, 30°C or less), the glass transition point too may be necessarily regarded as being 30°C or less.

Component (A-1) has a polystyrene-equivalent weight-average molecular weight, as determined by gel permeation chromatography (GPC), which, in terms of the handleability, appearance and adhesive properties, is preferably from 5,000 to 1,000,000, and more preferably from 30,000 to 500,000.

Component (A-1) may be used singly or two or more may be used together.

Component (A-1) can be obtained by copolymerizing a monomer which, polymerized, makes up above constitutional units (a) and a monomer which, polymerized, makes up above constitutional unit (b).

Polymerization is not limited as to the reaction temperature, time, polymerization initiator and other conditions, and may be carried out under known conditions. For example, the polymer can be easily obtained by using a radical polymerization initiator selected from among peroxides such as dicumyl peroxide and benzoyl peroxide and azo compounds such as azobisisobutyronitrile, and carrying out the reaction at, for example, between 50°C and 150°C, especially between 70°C and 120°C, for a period of from 1 to 10 hours, especially from 3 to 8 hours.

Examples of the monomer which, polymerized, makes up above constitutional units (a) include (meth)acrylic acid, (meth)acrylic acid esters, (meth)acrylonitrile, (meth)acrylamide, alkyl vinyl ethers, alkyl vinyl esters, styrene, and derivatives of these. In this invention "(meth)acryl" refers to acryl and/or methacryl.

Specific examples of (meth)acrylic acid esters and derivatives thereof include (meth)acrylic acid esters of monohydric alcohols, such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate and benzyl (meth)acrylate;
(meth)acrylic acid esters of alkoxy(poly)alkylene glycols, such as 2-methoxyethyl (meth)acrylate, 2-methoxypropyl (meth)acrylate, 3-methoxypropyl (meth)acrylate, 2-metoxybutyl (meth)acrylate, 3-methoxybutyl (meth)acrylate, 4-methoxybutyl (meth)acrylate, methoxypolyethylene glycol (meth)acrylate (the number of ethylene glycol units being, for example, preferably from 2 to 20), and methoxypolypropylene glycol (meth)acrylate (the number of propylene glycol units being, for example, preferably from 2 to 20);
mono(meth)acrylic acid esters of polyhydric alcohols, such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerol mono(meth)acrylate, pentaerythritol mono(meth)acrylate, polyethylene glycol mono(meth)acrylate (the number of ethylene glycol units being, for example, preferably from 2 to 20) and polypropylene glycol mono(meth)acrylate (the number of propylene glycol units being, for example, preferably from 2 to 20);
amino group-containing (meth)acrylic acid esters such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate and 4-(N,N-dimethylamino)butyl (meth)acrylate; and
epoxy group-containing (meth)acrylic acid esters such as glycidyl (meth)acrylate.

Specific examples of (meth)acrylonitrile derivatives include α-chloroacrylonitrile, α-chloromethylacrylonitrile, α-trifluoromethylacrylonitrile, α-methoxyacrylonitrile, α-ethoxyacrylonitrile and vinylidene cyanide.

Specific examples of (meth)acrylamide derivatives include N-methyl (meth)acrylamide, N,N-dimethyl (meth)acrylamide, N-ethyl (meth)acrylamide, N,N-diethyl (meth)acrylamide, N-methoxy (meth)acrylamide, N,N-dimethoxy (meth)acrylamide, N-ethoxy (meth)acrylamide, N,N-diethoxy (meth)acrylamide, diacetone (meth)acrylamide, N-methylol (meth)acrylamide, N-(2-hydroxyethyl) (meth)acrylamide, N,N-dimethylaminomethyl (meth)acrylamide and N-(2-dimethylamino)ethyl (meth)acrylamide,

Specific examples of alkyl vinyl ethers include methyl vinyl ether, ethyl vinyl ether, butyl vinyl ether and hexyl vinyl ether.

Specific examples of alkyl vinyl esters include vinyl formate, vinyl acetate, vinyl acrylate, vinyl butyrate, vinyl caproate and vinyl stearate.

Specific examples of styrene and derivatives thereof include styrene, α-methylstyrene and vinyltoluene.

Of these monomers, (meth)acrylic acid esters are preferred. Methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate and glycidyl (meth)acrylate are especially preferred.

Monomers such as these may be used singly or two or more may be used in admixture.

Examples of the monomer which, polymerized, makes up above constitutional unit (b) include
methacryloxymethyltrimethoxysilane,
methacryloxypropyltrimethoxysilane,
methacryloxyundecyltrimethoxysilane,
methacryloxypropylmethyldimethoxysilane,
methacryloxypropyldimethylmethoxysilane,
methacryloxypropyltriethoxysilane,
acryloxypropyltrimethoxysilane,
acryloxypropylmethyldimethoxysilane,
acryloxypropyldimethylmethoxysilane,
acryloxypropyltriethoxysilane,
acryloxymethyltrimethoxysilane,
acryloxyundecyltrimethoxysilane,
vinyltrimethoxysilane, vinyltriethoxysilane,
vinylmethyldimethoxysilane, allyltrimethoxysilane,
styryltrimethoxysilane, styrylmethyldimethoxysilane and
styryltriethoxysilane.

Of these, in terms of, for example, the availability, handleability, crosslink density and reactivity,
methacryloxypropyltrimethoxysilane,
methacryloxypropylmethyldimethoxysilane,
methacryloxypropyldimethylmethoxysilane,
acryloxypropyltrimethoxysilane and
acryloxypropylmethyldimethoxysilane
are preferred.

### [2] Component (A-2)

Component (A-2) is a vinyl (co)polymer which has no alkoxysilyl groups, includes no hydroxyphenyltriazine structures, benzophenone structures and benzotriazole structures, and has a glass transition point of 80°C or more.

The glass transition point of component (A-2) is preferably 90°C or more, and more preferably 100°C or more. When the glass transition point is below 80°C, appearance defects such as clouding of the film arise, or sufficient adhesion, durability and weather resistance cannot be obtained. The glass transition point can be measured based on JIS-K7121: 2012.

By including a vinyl (co)polymer having a high glass transition point, the elastic modulus of the film rises. There is a correlation between the elastic modulus of the film and the mobility of molecules included in the film. At a higher elastic modulus, the mobility of molecules decreases; the migration by low-molecular-weight ingredients such as ultraviolet absorber within the film over time is suppressed, and the agglomeration of these ingredients or their migration to the film surface tends to become more difficult. As a result, clouding of the appearance and a decrease in adhesion are suppressed.

Component (A-2) can be obtained by (co)polymerizing one or more vinyl monomer having a vinyl polymerizable functional group such as an alkenyl group, an alkenyloxy group, a (meth)acryloxy group or a (α-methyl)styryl group.

Polymerization may be carried out under known conditions and is not particularly limited as to such conditions as the reaction temperature, time and polymerization initiator. For example, component (A-2) can be easily obtained by carrying out the reaction at between 50°C and 150°C, especially between 70°C and 120°C, for 1 to 10 hours, especially 3 to 8 hours, using a radical polymerization initiator selected from peroxides such as dicumyl peroxide and benzoyl peroxide or azo compounds such as azobisisobutyronitrile.

The vinyl monomer serving as the starting material for component (A-2) is exemplified by the (meth)acrylic acids, (meth)acrylic acid esters, (meth)acrylonitriles, (meth)acrylamides, alkyl vinyl ethers, alkyl vinyl esters, styrenes and derivatives thereof mentioned above as monomers that serve as starting materials for constitutional unit (a). Specific examples include each of those mentioned as monomers that serve as starting materials for constitutional unit (a) of component (A-1). In addition to these, other examples include:
poly(meth)acrylic acid esters of polyhydric alcohols, such as ethylene glycol di(meth)acrylate, propylene glycol di(meth)acrylate, butylene glycol di(meth)acrylate, glycerol di(meth)acrylate, glycerol tri(meth)acrylate, pentaerythritol di(meth)acrylate, pentaerythritol tetra(meth)acrylate, 1,4-cyclohexanediol di(meth)acrylate, polyethylene glycol di(meth)acrylate (the number of ethylene glycol units being preferably, for example, from 2 to 20) and polypropylene glycol di(meth)acrylate (the number of propylene glycol units being preferably, for example, from 2 to 20);
(poly)esters of a non-polymerizable polybasic acid with a hydroxyalkyl (meth)acrylate, such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate and di[2-(meth)acryloyloxyethyl] phthalate; and
bis(meth)acrylamides such as N,N'-methylenebis(meth)acrylamide and N,N'-ethylenebis(meth)acrylamide.

Of these monomers, (meth)acrylic acid esters are preferred; methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate and dicyclopentenyloxyethyl (meth)acrylate are more preferred; methyl (meth)acrylate is even more preferred.

One of these monomers may be used alone or two or more may be used together as the vinyl monomer serving as the starting material for component (A-2).

A commercial product may be used as component (A-2). Specific examples include (meth)acrylic acid ester resins such as Dianal^{®} BR-85, BR-88 and LR-1065 from Mitsubishi Rayon Co., Ltd.

Component (A-2) may be of one type used alone or two or more may be used together.

Component (A-2) has a polystyrene-equivalent weight-average molecular weight as determined by GPC of preferably from 50,000 to 1,000,000, and more preferably from 60,000 to 800,000. When the molecular weight is too large, the viscosity may become too high and synthesis may be difficult, or component (A-2) may become difficult to handle. When the molecular weight is too small, appearance defects such as film clouding may arise or sufficient adhesion, durability and weather resistance may be unattainable.

The polystyrene-equivalent weight-average molecular weight by GPC of components (A-1) and (A-2) as a whole is preferably from 6,000 to 1,000,000, and more preferably from 50,000 to 800,000. When the molecular weight is too large, the viscosity may become too high, making synthesis difficult, or these components may become difficult to handle. When the molecular weight is too small, appearance defects such as film clouding may arise or sufficient adhesion, durability and weather resistance may be unattainable.

The mixing ratio by weight of component (A-1) and component (A-2), expressed as (A-1) : (A-2), is from 3:1 to 1:3, preferably from 2:1 to 1:2, and more preferably from 3:2 to 2:3. When the (A-1) content is too high, appearance defects such as film clouding arise and sufficient adhesion, durability and weather resistance are unattainable. When the (A-2) content is too high, the viscosity becomes too high, resulting in poor handleability, and the adhesion, durability and weather resistance of the film are inadequate.

Components (A-1) and (A-2) do not include any constitutional units to which are bonded organic ultraviolet-absorbing groups such as hydroxyphenyltriazine structures, benzotriazole structures and benzophenone structures. When organic ultraviolet-absorbing groups such as these which are bonded to a (co)polymer decompose, the glass transition point and other physical properties of the vinyl (co)polymer to which they are bonded undergo large changes, leading to cracking and peeling.

### [Component (B)]

Component (B) is an ultraviolet absorber for preventing the yellowing and surface deterioration of a substrate, and is one or more compound selected from the group consisting of (B-1) hydroxyphenyltriazine compounds, (B-2) benzophenone compounds and (B-3) benzotriazole compounds.

### (1) Component (B-1)

Specific examples of (B-1) hydroxyphenyltriazine compounds include 2-[2-hydroxy-4-(1-octyloxycarbonylethoxy)phenyl]-4,6-bis(4-phenylphenyl)-1,3,5-triazine (TINUVIN 479, from BASF Japan Ltd.), 2,4-bis(2-hydroxy-4-butoxyphenyl)-6-(2,4-bisbutoxyphenyl)-1,3,5-triazine (TINUVIN 460, BASF Japan Ltd.), 2-[4,6-bis(2,4-dimethylphenyl)-1,3,5-triazine-2-yl]-5-[3-(dodecyloxy)-2-hydroxypropoxy]phenol (TINUVIN 400, BASF Japan Ltd.), 2-(4,6-diphenyl-1,3,5-triazine-2-yl)-5-(hexyloxy)phenol (Tinuvin 405, from BASF) and Tinuvin 477 (BASF).

### (2) Component (B-2)

Specific examples of (B-2) benzophenone compounds include 2,4-dihydroxybenzophenone (Seesorb 106, from Shipro Kasei Kaisha, Ltd.), 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone,2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone and 2,3,4-trihydroxybenzophenone.

### (3) Component (B-3)

Specific examples of (B-3) benzotriazole compounds include 2-(2-hydroxy-5-t-methylphenyl)benzotriazole, 2-(2-hydroxy-5-t-octylphenyl)benzotriazole, 2-(2-hydroxy-5-t-butylphenyl)-2H-benzotriazole (Tinuvin-PS, from BASF KK) and 2-(2-hydroxy-3,5-di-t-butylphenyl)benzotriazole.

Of these, the following are preferred as component (B): (B-1) 2-[2-hydroxy-4-(1-octyloxycarbonylethoxy)phenyl]-4,6-bis(4-phenylphenyl)-1,3,5-triazine (TINUVIN 479, from BASF Japan Ltd.), (B-1) 2,4-bis(2-hydroxy-4-butoxyphenyl)-6-(2,4-bisbutoxyphenyl)-1,3,5-triazine (TINUVIN 460, from BASF Japan Ltd.); (B-2) 2,4-dihydroxybenzophenone (Seesorb 106, from Shipro Kasei Kaisha, Ltd.); (B-3) 2-(2-hydroxy-5-t-butylphenyl)-2H-benzotriazole (Tinuvin-PS, from BASF KK).

The component (B) content per 100 parts by weight of components (A-1) and (A-2) combined is from 1 to 30 parts by weight, and preferably from 10 to 25 parts by weight. At less than 1 part by weight, the weather resistance of the film is inadequate; at more than 30 parts by weight, the adherence of the film declines, cracking occurs and film appearance defects such as clouding arise.

In particular, the hydroxyphenyltriazine compound (B-1) is preferably included in an amount of from 1 to 5 parts by weight per 100 parts by weight of components (A-1) and (A-2) combined. Using (B-1) a hydroxyphenyltriazine compound together with (B-2) a benzophenone compound or (B-3) a benzotriazole compound is preferable for improving the weather resistance.

### [Component (C)]

Component (C) is a compound having a cyclic hindered amine structure that serves as a light stabilizer which scavenges radicals within the cured film that are generated by ultraviolet light.

Specific examples of compounds having a cyclic hindered amine structure include 3-dodecyl-1-(2,2',6,6'-tetramethyl-4-piperidinyl)pyrrolidine-2,5-dione, N-methyl-3-dodecyl-1-(2,2',6,6'-tetramethyl-4-piperidinyl)pyrrolidine-2,5-dione, N-acetyl-3-dodecyl-1-(2,2',6,6'-tetramethyl-4-piperidyl)pyrrolidine-2,5-dione, bis(2,2',6,6'-tetramethyl-4-piperidyl) sebacate, bis(1,2,2',6,6'-pentamethyl-4-piperidyl) sebacate, tetrakis(2,2',6,6'-tetramethyl-4-piperidyl) 1,2,3,4-butanetetracarboxylate, tetrakis(1,2,2',6,6'-pentamethyl-4-piperidyl) 1,2,3,4-butanetetracarboxylate, Tinuvin 123 (BASF Japan Ltd.), Tinuvin 249 (BASF Japan Ltd.), Tinuvin 622-SF (BASF Japan Ltd.), Tinuvin 765 (BASF Japan Ltd.), condensates of 1,2,3,4-butanetetracarboxylic acid with 2,2',6,6'-tetramethylpiperidinol and tridecanol, 8-acetyl-3-dodecyl-7,7',9,9'-tetramethyl-1,3,8-triazaspiro[4,5]decane-2,4-dione, condensates of 1,2,3,4-butanetetracarboxylic acid with 1,2,6,6'-pentamethyl-4-piperidinol and β,β,β',β'-tetramethyl-3,9-(2,4,8,10-tetraoxaspiro[5,5']undecane)diethanol, and condensates of 1,2,3,4-butanetetracarboxylic acid with 2,2',6,6'-pentamethyl-4-piperidinol and β,β,β',β'-tetramethyl-3,9-(2,4,8,10-tetraoxaspiro[5,5']undecane)diethanol. Additional examples include, for the purpose of immobilizing the light stabilizer, silyl-modified cyclic hindered amine compounds of the sort mentioned in JP-B S61-56187, such as 2,2,6,6-tetramethylpiperidino-4-propyltrimethoxysilane, 2,2',6,6'-tetramethylpiperidino-4-propylmethyldimethoxysilane, 2,2',6,6'-tetramethylpiperidino-4-propyltriethoxysilane, 2,2',6,6'-tetramethylpiperidino-4-propylmethyldiethoxysilane, and (partial) hydrolyzates of these. These light stabilizers may be used singly or two or more may be used together. Of these, a neutral hindered amine-type light stabilizer (TINUVIN 249, from BASF Japan Ltd.) is preferred.

The component (C) content per 100 parts by weight of above components (A-1) and (A-2) combined is from 0.5 to 7 parts by weight, and preferably from 1 to 5 parts by weight. At less than 0.5 part by weight, the weather resistance is inadequate; at more than 7 parts by weight, appearance defects such as film clouding arise.

### [Component (D)]

Component (D) is inorganic particles which have a median diameter, as measured by the dynamic light scattering method, of 100 nm or less.

The strength of the film is improved by reacting the surfaces of the inorganic particles with alkoxysilyl groups included in the above vinyl copolymer (A-1) and/or SiOH groups formed by the hydrolysis thereof. As a result, clouding of the film, decreased adherence and crack formation can be suppressed over an extended period of time.

Exemplary inorganic particles include particles of, for example, silica, alumina, cerium oxide, zirconium oxide, zinc oxide and titanium oxide. These may be used singly or two or more may be used together. Of these, one or more selected from among silica particles, zinc oxide particles, and titanium oxide particles and composite particles thereof are preferred because the film appearance and weather resistance are good; one or more selected from silica particles and zinc oxide particles is more preferred.

In terms of the film transparency, the median diameter of component (D) is preferably from 1 to 100 nm, more preferably from 3 to 50 nm, and even more preferably from 5 to 40 nm.

In this invention, the median diameter of component (D) can be measured by, for example, the dynamic light scattering method using laser light with an apparatus such as the Nanotrac UPA-EX150 (Nikkiso Co., Ltd.).

The component (D) content per 100 parts by weight of components (A-1) and (A-2) combined is from 3 to 20 parts by weight, and preferably from 5 to 15 parts by weight. At less than 3 parts by weight, the weather resistance is inadequate; at more than 20 parts by weight, appearance defects such as film clouding arise.

### [Component (E)]

Component (E) is a solvent. Although the solvent is not particularly limited so long as it dissolves or disperses above components (A-1), (A-2), (B), (C) and (D), it is preferable for an organic solvent having a high polarity to be the main solvent.

Specific examples of organic solvents include alcohols such as methanol, ethanol, isopropyl alcohol, n-butanol, isobutanol, t-butanol, cyclohexanol and diacetone alcohol; ketones such as methyl ethyl ketone, methyl propyl ketone, diethyl ketone, methyl isobutyl ketone, cyclohexanone and diacetone alcohol; ethers such as dipropyl ether, dibutyl ether, anisole, dioxane, ethylene glycol monoethyl ether, ethylene glycol monobutyl ether, propylene glycol monomethyl ether and propylene glycol monomethyl ether acetate; and esters such as ethyl acetate, propyl acetate, butyl acetate and cyclohexyl acetate. One of these may be used alone or a mixed solvent of two or more may be used. Of these, ethers are preferred; propylene glycol monomethyl ether is more preferred.

The component (E) content is an amount that sets the solids concentration of the primer composition of the invention to from 1 to 50 wt%, and preferably an amount that sets the solids concentration to from 5 to 30 wt%. At a lower concentration than the above range, sagging, wrinkling and blotchiness tend to arise; at a higher concentration than the above range, blushing, clouding and cracking of the film tend to arise.

### [Component (F)]

The primer composition of the invention sometimes absorbs moisture during storage or during use and undergoes a decrease in shelf stability due to the hydrolytic condensation of alkoxysilyl groups in component (A-1). A dehydrating agent (F) may be added in order to prevent this.

o-Carboxylic acid esters such as methyl o-formate, ethyl o-formate and ethyl o-acetate; dialkylcarbodiimides such as dicyclohexylcarbodiimide; and solid adsorbents such as silica gel and molecular sieve may be used as dehydrating agents.

### [Other Ingredients]

Where necessary, a dispersant for above component (D) may be added to the primer composition of the invention within a range that does not adversely impact the advantageous effects of the invention.

Exemplary dispersants include cationic surfactants, anionic surfactants, nonionic surfactants and various siloxane compounds having reactivity with the particle surfaces, such as silane coupling agents.

In addition, where necessary, pH adjustors, leveling agents, thickeners, pigments, dyes, metal powders, antioxidants, infrared reflecting/absorbing property-imparting agents, flexibility-imparting agents, antistatic agents, antifouling agents and water repellency-imparting agents may be added to the primer composition of the invention within ranges that do not detract from the advantageous effects of the invention.

The primer composition of the invention can be obtained by mixing together in the usual manner given amounts of the various above ingredients.

### <Coated Article>

The coated article of the invention has a substrate and a primer layer composed of a cured film of the primer composition formed on at least one side of the substrate, either directly or over one or more other layer.

### [Substrate]

Examples of the substrate include, but are not particularly limited to, various plastic materials (organic resin substrates), plastic molded bodies, wood products, ceramics, glass, metal, and composites thereof. Of these, various plastic materials (organic resin substrates) are preferably used. Polycarbonate resins, polystyrene resins, acrylic resins, modified acrylic resins, urethane resins, thiourethane resins, polycondensates of halogenated bisphenol A and ethylene glycol, acrylic urethane resins, halogenated aryl group-containing acrylic resins and sulfur-containing resins are especially preferred.

Additional examples include these resin substrates whose surfaces have been treated, such as those that have been chemical conversion treated, corona discharge treated, plasma treated, or treated with an acid or alkali solution. Laminates in which the surface layer is formed of a type of resin differing from the substrate itself may also be used.

Specific examples of laminates include laminates produced by a co-extrusion or lamination process which have an acrylic resin layer or urethane resin layer present as the surface layer on a polycarbonate resin substrate and similarly produced laminates which have an acrylic resin layer present as the surface layer on a polyester resin substrate.

In cases where the primer layer is formed over another layer on the substrate surface, examples of other layers include ultraviolet absorption layers, printed layers, recording layers, infrared-shielding layers, pressure-sensitive adhesive layers and inorganic vapor deposition layers.

### [Primer Layer]

The primer layer can be obtained by applying the primer composition obtained as described above onto at least one side of the substrate, either directly or over at least one other layer, and curing the applied composition.

Examples of methods for applying the primer composition include brush coating, spraying, dipping, flow coating, roll coating, curtain coating, spin coating and knife coating.

The method of curing the primer composition of the invention after it has been applied may involve air-drying the applied composition by letting it stand in air, or heating the applied composition. No particular limitation is imposed on the curing temperature and time, although heating for a period of from 10 minutes to 2 hours at or below the heat-resistance temperature of the substrate is preferred; heating at between 80°C and 135°C for a period of from 30 minutes to 2 hours is more preferred.

The thickness of the primer layer, although not particularly limited, is preferably from 0.1 to 50 µm. A thickness of 0.1 µm or more is preferred because the UV-shielding ability is better and peeling, etc. of the film can be suppressed. A thickness of 50 µm or less is preferred between the cracking resistance is even better. The thickness of the primer layer is more preferably from 1 to 20 µm, even more preferably from 3 to 15 µm, and most preferably from 5 to 12 µm.

The primer layer has an elastic modulus of preferably 1.5 GPa or more, more preferably 2.0 GPa or more, and even more preferably 4.0 GPa or more. At an elastic modulus of 1.5 GPa or more, the film has a better water resistance, heat resistance, durability, and adherence to the substrate and the subsequently described silicone hardcoat layer. An example of an apparatus for measuring the elastic modulus of the film is a nanoindenter (Hysitron Triboindenter, from Bruker Japan KK).

### [Hardcoat Layer]

In cases where the coated article of the invention is to be additionally imparted with abrasion resistance, a hardcoat layer such as a silicone hardcoat layer made of a cured film of a silicone hardcoating composition can be formed on the surface of the primer layer consisting of a cured film of the primer composition of the invention. Such a laminated system is able to also impart long-term weather resistance at the same time as high abrasion resistance.

The silicone hardcoat layer is not particularly limited so long as the above advantageous effects are obtained. For example, a cured film of a silicone hardcoating composition containing a silicone resin and colloidal silica is desirable. Examples of such films include those disclosed in JP-A S51-2736 and JP-A H09-71654.

Specifically, the silicone hardcoating composition is preferably one containing components (i) to (iv) below:
(i) a silicone resin obtained by (co)hydrolytically condensing at least one compound selected from alkoxysilanes of general formula (6) below

   (R⁷)ₘSi(OR⁸)₄₋ₘ (6)

   (wherein each R⁷ is independently a hydrogen atom or a substituted or unsubstituted monovalent hydrocarbon group and a plurality of R⁷ may mutually bond to form a linked group; each R⁸ is independently an alkyl group of 1 to 3 carbon atoms; and m is 0, 1 or 2) and (partial) hydrolytic condensates thereof,
(ii) colloidal silica,
(iii) a curing catalyst, and
(iv) a solvent.

### (1) Component (i)

Component (i) is a silicone resin obtained by the (co)hydrolytic condensation of at least one compound selected from alkoxysilanes of general formula (6) below and (partial) hydrolytic condensates thereof.

(R⁷)ₘSi(OR⁸)₄₋ₘ (6)

In the above formula, each R⁷ is independently a hydrogen atom or a substituted or unsubstituted monovalent hydrocarbon group of 1 to 12 carbon atoms and a plurality of R⁷ may mutually bond to form a linked group; each R⁸ is independently an alkyl group of 1 to 3 carbon atoms; and m is 0, 1 or 2.

The monovalent hydrocarbon group of R⁷ is an alkyl group of 1 to 12 carbon atoms, preferably 1 to 8 carbon atoms, and more preferably 1 to 6 carbon atoms, which may be linear, branched or cyclic; a cycloalkyl group of 3 to 12 carbon atoms, preferably 3 to 8 carbon atoms, and more preferably 3 to 6 carbon atoms; an alkenyl group of 2 to 12 carbon atoms, preferably 2 to 8 carbon atoms, and more preferably 2 to 6 carbon atoms; or an aryl group of 6 to 12 carbon atoms, preferably 6 to 8 carbon atoms.

Specific examples of the monovalent hydrocarbon group of R⁷ include alkyl groups such as methyl, ethyl, propyl, butyl, pentyl, hexyl, heptyl and octyl groups; cycloalkyl groups such as cyclopentyl and cyclohexyl groups; alkenyl groups such as vinyl and allyl groups; and aryl groups such as the phenyl group.

Some or all hydrogen atoms on these groups may be substituted with other substituents. Specific examples include halogen-substituted hydrocarbon groups such as chloromethyl, γ-chloropropyl and 3,3,3-trifluoropropyl groups; and (meth)acryloxy, epoxy, mercapto, amino and isocyanato-substituted hydrocarbon groups such as γ-(meth)acryloxypropyl, γ-glycidoxypropyl, 3,4-epoxycyclohexylethyl, γ-mercaptopropyl, γ-aminopropyl and γ-isocyanatopropyl groups. Additional examples include isocyanurate groups in which a plurality of isocyanato-substituted hydrocarbon groups are bonded to each other.

Of these, when used in applications requiring abrasion resistance and weather resistance, alkyl groups are preferred; when toughness and dyeability are required, epoxy, (meth)acryloxy and isocyanurate-substituted hydrocarbon groups are preferred.

Examples of the alkyl group of 1 to 3 carbon atoms of R⁸ include methyl, ethyl, n-propyl and isopropyl groups. Of these, taking into account, for example, the high hydrolytic condensation reactivity, the high vapor pressure of the alcohol R⁸OH that forms and the ease of distillation, methyl groups and ethyl groups are preferred.

When m = 0 in above formula (6), specific examples of (i-0) tetraalkoxysilanes represented by the general formula Si(OR⁸)₄ and partial hydrolytic condensates thereof include tetramethoxysilane, tetraethoxysilane, tetraisopropoxysilane, tetrabutoxysilane and partial hydrolytic condensates of tetramethoxysilane (available under the trade name "M Silicate 51" from Tama Chemicals Co., Ltd, the trade name "MSI51" from Colcoat Co., Ltd., and the trade names "MS51" and "MS56" from Mitsubishi Chemical Corporation), partial hydrolytic condensates of tetraethoxysilane (available under the trade names "Silicate 35" and "Silicate 45" from Tama Chemicals Co., Ltd., and the trade names "ESI40" and "ESI48" from Colcoat Co., Ltd.) and partial hydrolytic condensates of tetramethoxysilane and tetraethoxysilane (available under the trade name "FR-3" from Tama Chemicals Co., Ltd. and the trade name "EMSi48" from Colcoat Co., Ltd.).

When m = 1 in above formula (6), specific examples of (i-1) trialkoxysilanes represented by the general formula R⁷Si(OR⁸)₃ and partial hydrolytic condensates thereof include hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltiimethoxysilane, γ-methacryloxypropyltriethoxysilane, γ-acryloxypropyltrimethoxysilane, γ-acryloxypropyltriethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3-trimethoxysilylpropyl)isocyanurate and tris(3-triethoxysilylpropyl)isocyanurate in which the isocyanate groups are mutually bonded, partial hydrolytic condensates of methyltrimethoxysilane (available under the trade names "KC-89S" and "X-40-9220" from Shin-Etsu Chemical Co., Ltd.), and partial hydrolytic condensates of methyltrimethoxysilane and γ-glycidoxypropyltrimethoxysilane (available under the trade name"X-41-1056" from Shin-Etsu Chemical Co., Ltd.).

When m = 2 in above formula (6), specific examples of (i-2) dialkoxysilanes represented by the general formula R⁷₂Si(OR⁸)₂ and partial hydrolytic condensates thereof include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane and N-(2-aminoethyl)aminopropylmethyldimethoxysilane.

Although the silicone resin of component (i) may be prepared using above components (i-0), (i-1) and (i-2) in any ratio, to further enhance the shelf stability, abrasion resistance and cracking resistance, these components are preferably used in ratios such that the number of silicon atoms from (i-0) is from 0 to 50%, the number of silicon atoms from (i-1) is from 50 to 100% and the number of silicon atoms from (i-2) is from 0 to 50% of the total number of silicon atoms in components (i-0), (i-1) and (i-3); and are more preferably used in ratios such that the number of silicon atoms from (i-0) is from 0 to 30%, the number of silicon atoms from (i-1) is from 70 to 100% and the number of silicon atoms from (i-2) is from 0 to 30%. When the number of silicon atoms from the main ingredient (i-1) is 50% or more of the total number of silicon atoms, the curability is good and the cured film has a suitable hardness.

During production of the silicone resin of component (i), components (i-0), (i-1) and (i-2) may be (co)hydrolytically condensed by a known method. For example, the silicone resin can be obtained by (co)hydrolytically condensing, either individually or as a mixture, the alkoxysilanes of components (i-0), (i-1) and (i-2) or their (partial) hydrolytic condensates in water at a pH of from 1 to 7.5, preferably from 2 to 7. At this time, a dispersion of metal oxide nanoparticles such as a silica sol in water may be used. To adjust the pH in this range and promote hydrolysis, an inorganic acid or organic acid such as hydrofluoric acid, hydrochloric acid, nitric acid, formic acid, acetic acid, propionic acid, oxalic acid, citric acid, maleic acid, benzoic acid, malonic acid, glutaric acid, glycolic acid, methanesulfonic acid or toluenesulfonic acid; a solid acid catalyst such as a cation exchange resin having carboxylic acid groups or sulfonic acid groups on the surface; or water-dispersed metal oxide nanoparticles such as an acidic water-dispersed silica sol may be used as the catalyst. Alternatively, hydrolysis may be carried out in the presence of a dispersion of metal oxide nanoparticles in water or an organic solvent, such as a silica sol.

In the hydrolysis step, the amount of water used is preferably from 20 to 3,000 parts by weight per 100 parts by weight of components (i-0), (i-1) and (i-2) combined. The use of excess water lowers the equipment efficiency; moreover, when the ultimate composition is obtained, excess water may also trigger decreases in the coating properties and the drying characteristics due to the influence of residual water. To enhance the shelf stability, abrasion resistance and cracking resistance, the amount of water used is preferably at least 50 parts by weight but less than 150 parts by weight.

In the hydrolysis step, water may be added dropwise or poured into the alkoxysilane or a (partial) hydrolytic condensate thereof or, conversely, the alkoxysilane or a (partial) hydrolytic condensate thereof may be added dropwise or poured into water. In this case, the reaction solvent may include an organic solvent, although it preferably does not include an organic solvent. The reason is that there is a tendency for the molecular weight of the silicone resin obtained to become smaller as more organic solvent is included.

The condensation step may be carried out successively without interruption following the hydrolysis step, and is typically carried out at a liquid temperature that is normal room temperature or under heating at up to 100°C. At a temperature higher than 100°C, gelation may occur. At 80°C or above, condensation can be promoted by distilling off the alcohol that has formed in hydrolysis at normal pressure or under reduced pressure. A condensation catalyst such as a basic compound, an acidic compound or a metal chelate compound may be added for the purpose of promoting condensation.

Before or during the condensation step, an organic solvent may be added or a dispersion of metal oxide nanoparticles in water or an organic solvent, such as a silica sol, may be added for the purpose of adjusting the degree to which condensation proceeds and the concentration. Generally, as condensation proceeds, the molecular weight of the silicone resin rises and its solubility in water or the formed alcohol decreases. Therefore, it is preferable for the organic solvent that is added to be one which dissolves silicone resin well, boils at 80°C or above and has a relatively high polarity.

Specific examples of such organic solvents include alcohols such as isopropyl alcohol, n-butanol, isobutanol, t-butanol, cyclohexanol and diacetone alcohol; ketones such as methyl propyl ketone, methyl ethyl ketone, diethyl ketone, methyl isobutyl ketone, cyclohexanone and diacetone alcohol; ethers such as dipropyl ether, dibutyl ether, anisole, dioxane, ethylene glycol monoethyl ether, ethylene glycol monobutyl ether, propylene glycol monomethyl ether and propylene glycol monomethyl ether acetate; and esters such as propyl acetate, butyl acetate and cyclohexyl acetate.

The resulting silicone resin has a polystyrene-equivalent weight-average molecular weight, as determined by GPC analysis, that is preferably from 1,500 to 50,000, and more preferably from 2,000 to 20,000. At a molecular weight of 1,500 or more, the toughness of the film is excellent and crack formation can be suppressed; at a molecular weight of 50,000 or less, excessively low hardness and clouding of the film due to phase separation of the resin within the film can be suppressed.

### (2) Component (ii)

Component (ii) is colloidal silica. The colloidal silica of component (ii) is preferably in the form of silica that is colloidally dispersed in a water or organic solvent medium; a commercially available aqueous dispersion or organic dispersion-type product may be used.

Specific examples include Snowtex O, OS, O40, OL, methanol silica sol, IPA-ST, IBA-ST, PMA-ST and MEK-ST from Nissan Chemical Industries, Ltd.

Silica having a median diameter as measured by the dynamic light scattering method of 5 to 50 nm is preferred from the standpoint of the transparency and hardness of the resulting hardcoat layer.

The colloidal silica content, expressed in terms of the solids per 100 parts by weight of component (i), is preferably from 3 to 100 parts by weight, more preferably from 6 to 50 parts by weight, and even more preferably from 10 to 30 parts by weight.

### (3) Component (iii)

Component (iii) is a curing catalyst which promotes condensation reactions by condensable groups, such as silanol groups and alkoxy groups, that are included in the silicone resin (i).

Specific examples of component (iii) include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetraethylammonium hydroxide, tetrapropylammonium hydroxide, tetrabutylammonium hydroxide, tetramethylammonium acetate, n-hexylamine, tributylamine, diazabicycloundecene (DBU) and dicyandiamide; metal-containing compounds such as tetraisopropyl titanate, tetrabutyl titanate, titanium acetylacetonate, aluminum triisobutoxide, aluminum triisopropoxide, tris(acetylacetonate) aluminum, diisopropoxy(ethylacetoacetate) aluminum, aluminum perchlorate, aluminum chloride, cobalt octylate, cobalt acetylacetonate, iron acetylacetonate, tin acetylacetonate, dibutyltin octylate and dibutyltin laurate; and acidic compounds such as p-toluenesulfonic acid and trichloroacetic acid. Of these, sodium propionate, sodium acetate, sodium formate, trimethylbenzylammonium hydroxide, tetramethylammonium hydroxide, tetraethylammonium hydroxide, tetrapropylammonium hydroxide, tetrabutylammonium hydroxide, tris(acetylacetonate) aluminum and diisopropoxy(ethylacetoacetate) aluminum are especially preferred.

The content of component (iii) is not particularly limited so long as it is an effective amount for curing the silicone resin of component (i), although it is preferably from 0.0001 to 1 wt%, and more preferably from 0.0005 to 0.1 wt%, based on the silicone resin solids. At less than 0.0001 wt%, curing may be inadequate and the hardness may decrease; at more than 1 wt%, cracks may arise in the film and the water resistance may decrease.

### (4) Component (iv)

Component (iv) is a solvent. The solvent of component (iv) is exemplified by the same solvents as used in component (E) of the primer composition. The solvent content is an amount that sets the solids concentration of the silicone composition to preferably from 5 to 40 wt%, and more preferably from 10 to 35 wt%.

### (5) Component (v)

An organic ultraviolet absorber may be added to the above silicone hardcoating composition within a range that does not detract from the advantageous effects of the invention. The organic ultraviolet absorber is exemplified by benzophenone derivatives, benzotriazole derivatives, cyanoacrylate derivatives and triazine derivatives. Specific examples include 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzopheone and 2,3,4-trihydroxybenzophenone; 2-(2-hydroxy-5-t-methylphenyl)benzotriazole, 2-(2-hydroxy-5-t-octylphenyl)benzotriazole, Tinuvin-PS (from BASF) and 2-(2-hydroxy-3,5-di-t-butylphenyl)benzotriazole; and (2-(4,6-diphenyl-1,3,5-triazine-2-yl)-5-(hexyloxy)phenol, Tinuvin 400 (BASF), Tinuvin 405 (BASF), Tinuvin 460 (BASF), Tinuvin 477 (BASF), Tinuvin 479 (BASF), Tinuvin 1577ED (BASF) and Tinuvin 1600 (BASF). In addition, a silane coupling agent-type reactive ultraviolet absorber in which some of the above ultraviolet absorber is substituted with alkoxysilyl groups may be used.

Of these, a silane coupling agent-type reactive ultraviolet absorber in which some of the above compound has been substituted with alkoxysilyl groups is preferred. By using the above reactive ultraviolet absorber, ultraviolet absorbing groups are immobilized within the hardcoat layer, suppressing bleedout of the ultraviolet absorber over time, which is effective for suppressing clouding and cracks.

The above reactive ultraviolet absorber is preferably a benzophenone derivative of general formula (7) below which has at least one alkoxysilyl group.

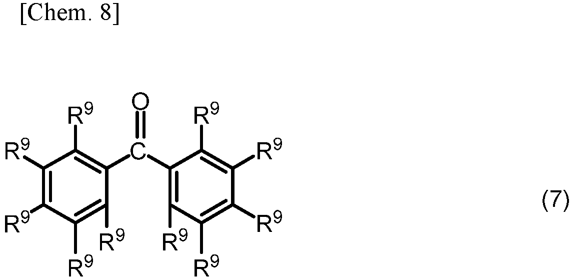

In the formula, each R⁹ is independently a hydrogen atom, a hydroxyl group, an alkyl group of 1 to 5 carbon atoms, or a group of general formula (8) below, and at least one occurrence of R⁹ is a group of general formula (8) below:

* -O-(CH₂)-SiR¹⁰ₖ(OR¹¹)₃₋ₖ (8)

(wherein R¹⁰ and R¹¹ are each independently an alkyl group of 1 to 5 carbon atoms, j is an integer from 1 to 8, k is an integer from 0 to 2, and an asterisk * denotes a bond with a neighboring atom).

In formula (7) above, the alkyl group of R⁹ may be a linear or branched alkyl group of 1 to 5 carbon atoms, preferably 1 to 3 carbon atoms. Specific examples include methyl, ethyl, n-propyl, isopropyl, n-butyl, isobutyl, sec-butyl, t-butyl, n-pentyl and isopentyl groups.

At least one occurrence of R⁹ is a group of general formula (8) above. By having the group of general formula (8), the ultraviolet absorber is immobilized within the hardcoat layer, suppressing bleedout over time, which is effective for suppressing clouding and cracking of the hardcoat layer.

Having at least one occurrence of R⁹ be a hydroxyl group is preferable because the ultraviolet absorption becomes better. Among the occurrences of R⁹, aside from groups of general formula (8) and hydroxyl groups, hydrogen atoms are preferred.

In formula (8), the alkyl groups of 1 to 5 carbon atoms represented by R¹⁰ and R¹¹ preferably have 1 to 3 carbon atoms. Specific examples of each include the same groups as mentioned above for R⁹. Of these, methyl and ethyl groups are preferred for R¹⁰. As for R¹¹, taking into account the high hydrolytic condensation reactivity and the high vapor pressure and ease of distilling off the formed alcohol R¹¹OH, methyl and ethyl groups are preferred.

The subscript 'j' is an integer from 1 to 8. From the standpoint of the availability of the starting material, an integer from 1 to 3 is preferred, and 3 is more preferred.

The subscript 'k' is an integer from 0 to 2. It is especially preferable for k to be 0 because the hydrolytic condensation reactivity becomes high and the abrasion resistance of the film increases.

Of the benzophenone derivatives represented by general formula (7) above, 2-hydroxy-4-trimethoxysilylpropoxybenzophenone is preferred.

When an organic ultraviolet absorber is included, the content thereof per 100 parts by weight of component (i) is preferably from 0.1 to 10 parts by weight, and more preferably from 0.2 to 5 parts by weight.

### (6) Component (vi)

An inorganic ultraviolet absorber may be added to the above silicone hardcoating composition within a range that does not compromise the advantageous effects of the invention. An inorganic ultraviolet absorber is preferred because the compatibility with the coating composition and the dispersibility are good and also because, when the composition is rendered into a film, the film is able to maintain a fixed transparency without clouding.

Specific examples include oxide nanoparticles of a single oxide such as titanium oxide, cerium oxide, zinc oxide, tin oxide, zirconium oxide, antimony oxide, tungsten oxide or iron oxide, composite metal oxide nanoparticles of the metallic elements making up the above oxides, and mixtures of these.

From the standpoint of weather resistance and film transparency, the inorganic ultraviolet absorber is preferably titanium oxide, and more preferably, titanium oxide doped with dissimilar metals.

The elements making up the metal oxides that are capable of combining with titanium oxide are exemplified by group 13 elements, group 14 elements (excluding carbon), first transition series elements, second transition series elements, third transition series elements and lanthanoids. The dissimilar metals may be scattered within the titanium oxide structure or may be unevenly distributed. Inorganic ultraviolet absorbers in which the dissimilar metals are scattered within the structure have the structure seen in cohydrolyzates of a plurality of metal alkoxides. Inorganic ultraviolet absorbers in which the dissimilar metals are unevenly distributed within the structure have the structure seen in core-shell particles (particles in which a small metal oxide nanoparticle serves as the core and which have a shell of another metal oxide outside of this core).

There are generally three types of titanium oxide: rutile, anatase and brookite. In this invention, it is preferable to use tetragonal rutile-type titanium oxide, which has a low photocatalytic activity and an excellent ultraviolet absorbing ability, as the solid solvent for tin and manganese.

The manganese constituent serving as the solid solute may be one derived from a manganese salt; examples include manganese chalcogenides such as manganese oxide and manganese sulfate, with manganese oxide being preferred. Examples of manganese salts include manganese halides such as manganese fluoride, manganese chloride, manganese bromide and manganese iodide; manganese pseudohalides such as manganese cyanide and manganese isothiocyanide; and mineral acid salts of manganese such as manganese nitrate, manganese sulfate and manganese phosphate. From the standpoint of stability and availability, manganese chloride is preferred. The manganese in manganese salts can be selected from those having valences of from 2 to 7, although divalent manganese is preferred.

In cases where tin and manganese are formed into a solid solution in tetragonal titanium oxide, the solid solubility of the tin constituent, expressed as the molar ratio with titanium (Ti/Sn), is preferably from 10 to 1,000, and more preferably from 20 to 200; and the solid solubility of the manganese constituent, expressed as the molar ratio with titanium (Ti/Mn), is preferably from 10 to 1,000, and more preferably from 20 to 200. When the solid solubilities of the tin constituent and the manganese constituent, expressed as the molar ratios with titanium (Ti/Sn and Ti/Mn), are smaller than 10, light absorption in the visible region that is attributable to tin and manganese becomes pronounced; on the other hand, when they exceed 1,000, the photocatalytic activity is not fully deactivated and the crystal system sometimes becomes anatase, which has a small visible light absorptivity.

The solid solution of the tin constituent and the manganese constituent may be a substitutional solid solution or may be an interstitial solid solution. As used herein, "substitutional" refers to a type of solid solution that forms with the substitution of tin and manganese at titanium(IV) ion sites in titanium oxide, and "interstitial" refers to a type of solid solution that forms with the presence of tin and manganese at interstitial sites in titanium oxide. In an interstitial solid solution, F-centers that cause coloration tend to form, in addition to which, because the symmetry around the metal ions is poor, the Franck-Condon factor for vibronic transitions in metal ions increases, facilitating the absorption of visible light. Hence, a substitutional solid solution is preferred.

Component (vi) is preferably a core-shell type tetragonal titanium oxide solid solution in which tin and manganese-doped tetragonal titanium oxide nanoparticles serve as the cores and which has shells of silicon oxide outside of the cores. The silicon oxide shells that form outside of the tin and manganese-doped tetragonal titanium oxide nanoparticle cores contain silicon oxide as the main ingredient, may include other ingredients such as tin and aluminum, and may be formed by any technique. For example, the silicon oxide shells can be formed by the hydrolytic condensation of a tetraalkoxysilane. A commonly available compound such as tetramethoxysilane, tetraethoxysilane, tetra(n-propoxy)silane, tetra(isopropoxy)silane or tetra(n-butoxy)silane may be used as the tetraalkoxysilane, From the standpoint of reactivity and safety, tetraethoxysilane is preferred. An example of such a compound that may be used is the commercially available product "KBE-04" from Shin-Etsu Chemical Co., Ltd. The hydrolytic condensation of tetraalkoxysilane may be carried out in water. Condensation catalysts such as ammonia, aluminum salts, organoaluminum compounds, tin salts and organotin compounds may be suitably used, although ammonia is especially preferred because it also acts as a dispersant for the core nanoparticles.

Using such tin and manganese-doped tetragonal titanium oxide nanoparticles as the cores, the ratio of silicon oxide in the shells with respect to the overall core-shell type tetragonal titanium oxide solid solution having silicon oxide shells outside of the cores is preferably from 20 to 50 wt%, more preferably from 25 to 45 wt%, and even more preferably from 30 to 40 wt%. At less than 20 wt%, shell formation is sometimes inadequate; on the other hand, at more than 50 wt%, agglomeration of the particles proceeds and the dispersion sometimes becomes opaque.

In the core-shell type tetragonal titanium oxide solid solution, the volume-based median diameter of the tin and manganese-doped tetragonal titanium oxide nanoparticles serving as the cores, as measured by the dynamic light scattering method using laser light, is preferably 30 nm or less, and more preferably 20 nm or less. The volume-based median diameter of the core-shell type tetragonal titanium solid solution is preferably 50 nm or less, and more preferably 30 nm or less. When the median diameters for the above core nanoparticles and the core-shell solid solution exceed the above-indicated upper limits, the dispersion sometimes becomes opaque. Although there is no particular lower limit in the median diameter of the core nanoparticles, it is generally preferable for this to be 5 nm or more. There is likewise no particular lower limit in the median diameter of the core-shell solid solution, although it is generally preferable for this to be 6 nm or more.

An apparatus such as the Nanotrac UPA-EX150 (Nikkiso Co., Ltd.) can be used to measure the volume-based median diameters in this invention.

When the above inorganic ultraviolet absorber is included, the content thereof per 100 parts by weight of components (i) and (ii) combined is preferably from 0.1 to 30 parts by weight, and more preferably from 0.3 to 20 parts by weight.

### (7) Other Ingredients

Where necessary, pH adjustors, leveling agents, thickeners, pigments, dyes, metal oxide nanoparticles, metal powders, antioxidants, ultraviolet absorbers, ultraviolet stabilizers, infrared reflecting/absorbing property-imparting agents, flexibility-imparting agents, antistatic agents, antifouling agents and water repellency-imparting agents may be added to the above silicone hardcoating composition within ranges that do not compromise the advantageous effects of the invention.

The silicone hardcoating composition used in this invention can be obtained by mixing together, in the usual manner, given amounts of the various above ingredients.

By applying onto a resin substrate and curing the resulting silicone composition, a hardcoat layer can be formed.

The method for applying the silicone hardcoating composition is exemplified by the same methods as for the primer composition.

Following application of the silicone hardcoating composition, curing can be effected by letting the composition stand in air and air-drying or by heating. The curing temperature and curing time are not particularly limited. For example, heating for a period of from 10 minutes to 2 hours at or below the heat-resistance temperature of the substrate is preferred; heating for a period of from 30 minutes to 2 hours at between 80°C and 135°C is more preferred.

The thickness of the resulting silicone hardcoat layer, although not particularly limited, is preferably from 0.1 to 50 µm. To obtain a good film hardness and abrasion resistance, long-term stable adherence, and the absence of cracks, the film thickness is more preferably from 1 to 20 µm, even more preferably from 3 to 15 µm, and most preferably from 5 to 12 µm. A film thickness of 0.1 µm or more is desirable because the ultraviolet-shielding ability is good and problems such as peeling of the film can be suppressed. A film thickness of 50 µm or less is desirable because the film cracking resistance is good, enabling crack formation in the film to be suppressed.

A coated article of excellent transparency, weather resistance and abrasion resistance can be obtained by superimposing, on the primer layer obtained by applying the primer composition of the invention to a substrate, a hardcoat layer formed by curing the above silicone hardcoating composition.

The coated article of the invention having a silicone hardcoat layer on a primer layer may additionally have on the silicon hardcoat layer such layers as ultraviolet absorbing layers, printed layers, recording layers, infrared-shielding layers, pressure-sensitive adhesive layers and inorganic vapor-deposited film layers.

### [Film Properties]

In the coated article of the invention having a silicone hardcoat layer on a primer layer, the film has an excellent visible light transmittance. This can be evaluated using, as the indicator, the haze value of the film. Because the haze becomes larger at a greater film thickness, the haze here at a film thickness of 20 µm or less is preferably 2.0 or less, more preferably 1.5 or less, and even more preferably 1.0 or less. The haze of the film can be measured with, for example, the NDH 2000 (Nippon Denshoku Industries Co., Ltd.) haze meter.

In the coated article of the invention having a silicone hardcoat layer on a primer layer, adhesion between the film and the substrate is excellent. This can be evaluated by means of a crosscut peel test according to JIS K5400. Six lengthwise and six crosswise slits are made in the film at 2 mm intervals with a razor blade, creating 25 squares. Cellotape^{®} (Nichiban Co., Ltd.) is then firmly attached to the scored film, following which the tape is rapidly peeled off toward oneself at 90°. The closer the number of squares (X) where the film remains and does not peel off is to 25, the better the adhesion, which is indicated as X/25. By boiling the cured film in 100°C water for 2 hours and then carrying out the same crosscut peel test, the result can be used as an indicator of the water-resistant adhesion.

The coated article of the invention having a silicone hardcoat layer on a primer layer has an excellent abrasion resistance. The abrasion resistance can be evaluated using, as the indicator, the difference in haze (ΔHz) before and after the Taber abrasion test. In accordance with ASTM 1044, when a CS-10F abrasion wheel is mounted on a Taber abrasion tester, the haze after 500 rotations under a load of 500 gf is measured and ΔHz (% points) is determined as (haze after test, %) - (haze before test, %), ΔHz at a film thickness of 20 µm or less is preferably 10 points or less, more preferably 8 points or less, and still more preferably 6 points or less.

The coated article of the invention having a silicone hardcoat layer on a primer layer has a good weather resistance. In one exemplary weathering test, the Isobar UV Tester W-151 from Iwasaki Electric Co., Ltd. is used to subject a test specimen to 12-hour cycles, each cycle consisting of 4 hours of ultraviolet irradiation (irradiation intensity, 90 mW/cm²; black panel temperature, 63°C; 70% humidity), 4 hours of darkness (black panel temperature, 63°C; 90% humidity) and 4 hours of condensation (black panel temperature, 30°C; 95% humidity), and evaluation can be carried out by observing the state of the test specimen every 10 cycles (120 hours). Evaluation may be carried out by observation with the unaided eye or using a microscope. The microscope used for this purpose is not particularly limited. For example, the VK-8710 laser microscope available from Keyence Corporation may be used.

In the above weathering test, it is preferable for no cracking or peeling to arise even after 600 hours of testing, more preferable for no cracking or peeling to arise even after 840 hours of testing, and still more preferable for no cracking or peeling to arise even after 1,080 hours of testing.

Also, in the above weathering test, one-third of the testing time is a light irradiation test, and the intensity is 900 W/m². The cumulative energy when ultraviolet light having an intensity of 900 W/m² is irradiated for one hour is 0.9 kWh/m². Following the rules for converting derived units, this is equal to 3.24 MJ (megajoules). Therefore, the cumulative irradiance after 1,080 hours of the above SUV test is 1,080 (testing time) × 1/3 (ratio of light irradiation test) × 3.24 MJ/m²·h ≈ 1,166 MJ/m².

The testing conditions and environment for the weathering test in this invention may be set in any way, but correlations between the testing conditions and outdoor exposure can be easily estimated. For example, using a UV illuminometer (Eye UV illuminometer UVP365-1, from Iwasaki Electric Co., Ltd.) to measure the amount of outdoor ultraviolet radiation, one finds that it is 1×101 W/m² (when measured in fair weather at noon on the day of the vernal equinox in Matsuida-machi, Annaka-shi in Gunma Prefecture, Japan). Given that the average number of hours of sunshine per year in Japan is about 2,000 hours, the cumulative irradiance over one year in Japan can be roughly calculated to be 2,000 h/yr × 1 year × 10 W/m² = 20 kWh/m² ≈ 72 MJ/m². Therefore, from the formula below, the cumulative irradiance after the above weathering test of 1,080 hours corresponds to the cumulative irradiance incurred by the sample when used outdoors in Japan for about 16 years. 1,166 MJ/m2 (cumulative irradiance after 1,080 hour test)/72 MJ/m2·yr (annual light irradiance in Japan) ≈ 16.2 years

The outdoor environment varies depending on the latitude and climate, and so the testing conditions should be suitably modified according to the usage environment of the cured film.

### EXAMPLES

Synthesis Examples, Examples and Comparative Examples are given below by way of illustration, although the invention is not limited by these Examples. In the Examples below, "%" refers to percent by weight, "parts" refers to parts by weight, and "Me" stands for a methyl group. Also, the weight-average molecular weight is measured by gel permeation chromatography (GPC) relative to a polystyrene standard.

### [1] Synthesis of Copolymer

### [Synthesis Example 1]

### <Synthesis of Vinyl Copolymer Having Alkoxysilyl Groups (A-1-1)>

A 2-liter flask equipped with a stirrer, a condenser and a thermometer was charged with 126 g of isobutyl acetate and 126 g of isopropyl alcohol as the solvents, and heated to 80°C under a stream of nitrogen. To this was added dropwise, over 1.5 hours and at between 80°C and 90°C, an already prepared monomer mixture solution (obtained by mixing together 50 g of γ-methacryloxypropyltrimethoxysilane, 190 g of methyl methacrylate, 18 g of glycidyl methacrylate and, as a polymerization initiator, 1 g of 2,2'-azobis(2-methylbutyronitrile), and the flask contents were stirred for 7 hours at between 80°C and 90°C. The system was then left to cool and 367 g of diacetone alcohol was poured in at the very end, stopping the reaction.

The resulting alkoxysilyl group-containing vinyl copolymer (A-1-1) had a trimethoxysilyl group content of 9.4 wt% and a weight-average molecular weight of 60,800.

The product obtained by collecting 5 grams of the resulting solution in an aluminum petri dish, heating it in a 105°C desiccator for 1 hour to remove the solvent and then cooling to 25°C was in a highly viscous liquid state, and so the glass transition point of the vinyl copolymer (A-1-1) was judged to be 25°C or less.

### [Comparative Synthesis Example 1]

### <Synthesis of Vinyl Copolymer having Ultraviolet-Absorbing Groups and Alkoxysilyl Groups (A'-1-2)>

A 2-liter flask equipped with a stirrer, a condenser and a thermometer was charged with 126 g of isobutyl acetate and 126 g of isopropyl alcohol as the solvents, and heated to 80°C under a stream of nitrogen. To this was added dropwise, over 1.5 hours and at between 80°C and 90°C, an already prepared monomer mixture solution (obtained by mixing together 90 g of γ-methacryloxypropyltrimethoxysilane, 270 g of methyl methacrylate, 22.5 g of glycidyl methacrylate, 67.5 g of RUVA-1 as an ultraviolet-absorbing group (2-[2'-hydroxy-5'-(2-methacryloxyethyl)phenyl]-2H-benzotriazole (RUVA-93, from Otsuka Chemical Co., Ltd.)) and 1 g of 2,2'-azobis(2-methylbutyronitrile) as a polymerization initiator), and the flask contents were stirred for 5 hours at between 80°C and 90°C. The system was then left to cool and 367 g of diacetone alcohol was poured in at the very end, stopping the reaction.

The resulting ultraviolet-absorbing group and alkoxysilyl group-containing vinyl copolymer (A'-1-2) had an ultraviolet-absorbing group content of 10.2 wt%, a trimethoxysilyl group content of 10.2 wt%, and a weight-average molecular weight of 87,800.

The product obtained by collecting 5 grams of the resulting solution in an aluminum petri dish, heating it in a 105°C desiccator for 1 hour to remove the solvent and then cooling to 25°C was in a highly viscous liquid state, and so the glass transition point of the vinyl copolymer (A'-1-2) was judged to be 25°C or less.

### [2] Synthesis of Ultraviolet Absorber

### [Synthesis Example 2]

### <Synthesis of Organic Ultraviolet Absorber (X-1)>

4-Allyloxy-2-hydroxybenzophenone (25.4 g, 0.1 mole) was suspended in 70 mL of toluene. To this was added 0.05 g of the platinum catalyst PL50-T (Shin-Etsu Chemical Co., Ltd.), the temperature was raised to 65°C, and trimethoxysilane (29.3 g, 0.24 mole) was added. After 2 hours of stirring at 80°C, the reaction mixture was cooled and 5 g of Wakogel C-100 (Fujifilm Wako Pure Chemical Corporation) was added, adsorbing the platinum catalyst, following which filtration was carried out. The solvent was then removed by vacuum concentration, giving 34.8 g (0.092 mole) of an organic ultraviolet absorber (X-1) in the form of a red oil.

The ¹H-NMR spectrum of the product matched that of 2-hydroxy-4-trimethoxysilylpropoxybenzophenone.

### [Synthesis Example 3]

### <Synthesis of Inorganic Ultraviolet Absorber (X-2)>

A 10 wt% aqueous dispersion (solids concentration, 10 wt%) of a core-shell type tetragonal titanium oxide solid solution in which tin and manganese-doped tetragonal titanium oxide solid solution nanoparticles serve as the cores and which has silicon oxide shells outside of the cores was obtained as an inorganic ultraviolet absorber (X-2) by the method described in Step (A) of Synthesis Example 1 in JP No. 6269429.

### [3] Preparation of Silicone Hardcoating Composition

### [Synthesis Example 4]

### <Preparation of Organic Ultraviolet Absorber-Containing Silicone Hardcoating Composition (HC-1)>

A 500-mL flask equipped with a stirrer, a condenser and a thermometer was charged with 48 g of methyltrimethoxysilane and 1.2 g of the organic ultraviolet absorber (X-1) obtained in Synthesis Example 2, and the mixture was maintained at 20°C while stirring. To this were added 29.4 g of Snowtex O (from Nissan Chemical Industries, Ltd.; a 20 wt% aqueous dispersion of colloidal silica; average particle size, 15 to 20 nm), 8.2 g of acetic acid and 30 g of water, and the mixture was stirred. After 3 hours of stirring at 60°C, 45 g of n-butanol was added and the methanol that formed as a by-product and a portion of the water were removed by distillation at normal pressure in a combined amount of 72 g. Isopropanol was then added to a solids concentration of 30 wt%, giving a solution (Y-1).

Next, 0.02 g of the polyether-modified silicone KP-341 (Shin-Etsu Chemical Co., Ltd.) as a leveling agent was added to 30 g of the above solution (Y-1), 0.2 g of a 10 wt% aqueous solution of tetrabutylammonium hydroxide was added as the curing catalyst and the mixture was stirred at 25°C for 1 hour. Precipitate was removed by filtering the resulting solution with filter paper, giving an organic ultraviolet absorber-containing silicone hardcoating composition (HC-1).

### [Synthesis Example 5]

### <Preparation of Inorganic Ultraviolet Absorber-Containing Silicone Hardcoating Composition (HC-2)>

A 500-mL flask equipped with a stirrer, a condenser and a thermometer was charged with 25 g of methyltrimethoxysilane and 7.8 g of the inorganic ultraviolet absorber (X-2) obtained in Synthesis Example 3. While stirring the mixture at 25°C, 21 g of Snowtex O (from Nissan Chemical Industries, Ltd.; a 20 wt% aqueous dispersion of colloidal silica; average particle size, 15 to 20 nm) and 0.14 g of acetic acid (Wako Pure Chemical Industries, Ltd.) were added and the mixture was stirred at 60°C for 3 hours. To this was added 28 g of cyclohexanone, following which the methanol that formed as a by-product and a portion of the water were removed by distillation at normal pressure in a combined amount of 23 g. At the time of distillation, the temperature within the flask reached 91°C. The resulting suspension was cooled to room temperature and 4.0 g of acetic acid was added. In addition, isopropanol was added to a solids concentration of 30 wt%, giving a solution (Y-2).

Next, 0.02 g of the polyether-modified silicone KP-341 (Shin-Etsu Chemical Co., Ltd.) was added as a leveling agent to 30 g of the above solution (Y-2), 0.2 g of a 10 wt% aqueous solution of tetrabutylammonium hydroxide was added as a curing catalyst, and the mixture was stirred at 25°C for 1 hour. Precipitate was removed by filtering the resulting solution with filter paper, giving an inorganic ultraviolet absorber-containing silicone hardcoating composition (HC-2).

### [4] Preparation of Primer Composition

### [Examples 1-1 to 1-14, Comparative Examples 1-1 to 1-13]

Primer compositions were obtained by adding the following ingredients to the compositions prepared in the usual manner according to the formulations shown in Tables 1-1 and 2-1 (amounts are shown in parts by weight, solids basis) and adjusting their concentrations: the dehydrating agent ethyl o-formate (F-1) in an amount representing 5 wt% of the composition, the leveling agent LE-604 (G-1) in an amount representing 500 ppm by weight of the composition, and propylene glycol monomethyl ether (E-1) in an amount that brings the total solids concentration to 20 wt%.

Of the abbreviations used in the Examples and Comparative Examples, those abbreviations not explained in the Synthesis Examples are as follows.

### <Component (A-2)>

| | |
|---|---|
| A-2-1: | Polymethyl methacrylate resin (Dianal^{®} BR-88, from Mitsubishi Rayon Co., Ltd.; Mw, 576,900; Tg, 105°C) |
| A-2-2: | Polymethyl methacrylate resin (Dianal^{®} BR-85, from Mitsubishi Rayon Co., Ltd.; Mw, 263,800; Tg, 105°C) |
| A-2-3: | Polymethyl methacrylate resin (Dianal^{®} LR-1065, 45% methyl ethyl ketone solution from Mitsubishi Chemical Corporation; Mw, 75,900; Tg, 105°C) |
| A'-2-4: | Polymethyl methacrylate resin (Dianal^{®} BR-90, from Mitsubishi Rayon Co., Ltd.; Mw, 258,300; Tg, 65°C) |

### <(B) Ultraviolet Absorbers>

| | |
|---|---|
| B-1-1: | 2-[2-Hydroxy-4-(1-octyloxycarbonylethoxy)phenyl]-4,6-bis(4-phenylphenyl)-1,3,5-triazine (TINUVIN 479, from BASF Japan Ltd.) |
| B-1-2: | 2,4-Bis[2-hydroxy-4-butoxyphenyl]-6-(2,4-bisbutoxyphenyl)-1,3,5-triazine (TINUVIN 460, from BASF Japan Ltd.) |
| B-2-1: | 2,4-Dihydroxybenzophenone (Seesorb 106, from Shipro Kasei Kaisha, Ltd.) |
| B-3-1: | 2-(2-Hydroxy-5-t-butylphenyl)-2H-benzotriazole (Tinuvin-PS, from BASF KK) |

### <(C) Hindered Amine Light Stabilizer>

C-1: Neutral hindered amine light stabilizer (TINUVIN 249, from BASF Japan Ltd.)

### <(D) Inorganic Particles>

| | |
|---|---|
| D-1: | Alcohol dispersion of zinc oxide (ZNTANB15WT%-E34; solids concentration, 15%; primary particle size, 10 to 15 nm; from CIK NanoTek Corporation) |
| D-2: | Propylene glycol monomethyl ether dispersion of silica (PMA-ST; solids concentration, 30%; primary particle size, 10 to 15 nm; Nissan Chemical Industries, Ltd.) |

### <(E) Solvent>

| | |
|---|---|
| E-1: | Propylene glycol monomethyl ether |

### <(F) Dehydrating Agent>

| | |
|---|---|
| F-1: | Ethyl o-formate |

### <(G) Leveling Agent>

| | |
|---|---|
| G-1: | LE-604 (Kyoeisha Chemical Co., Ltd.) |

### [5] Production of Coated Articles and Evaluation of Their Properties (1)

### [Examples 2-1 to 2-14, Comparative Examples 2-1 to 2-13]

The respective primer compositions obtained in Examples 1-1 to 1-14 and Comparative Examples 1-1 to 1-13 were applied by flow coating to a surface-cleaned polycarbonate resin sheet (thickness, 1 mm; product name: Iupilon, from Mitsubishi Plastics) such as to give a cured film thickness of about 5 to 10 µm and heat-cured at 130°C for 90 minutes, forming a primer layer.

### (1) Elastic Modulus of Primer Layer:

The elastic modulus of the primer layer was determined by the nanoindentation method using a nanoindenter (Hysitron Triboindenter, from Bruker Japan KK).

Specifically, the samples obtained were cut to a size of 15 mm × 15 mm, an instant adhesive (Aron Alpha fast-acting all-purpose, from Toagosei Co., Ltd.) was applied onto a customized sample-holding substrate (10 mm ×10 mm; thickness, 1 mm) and the substrate side of the sample was bonded to the substrate, thereby giving a measurement sample.

The elastic modulus of the primer layer was determined by securing the resulting measurement sample to a customized sample-holding support in such a way that the primer layer side is in contact with the indenter and analyzing by means of specialized software the data generated when a Berkovitch indenter is pressed into the surface of the primer layer to a maximum depth of 100 nm within a room temperature (23°C) environment.

The same operation was carried out at three different points on each sample, the elastic moduli were determined and their average value was calculated. The results are presented in Tables 1-2 and 2-2.

### [6] Production of Coated Articles and Evaluation of Their Properties (2)

### [Examples 3-1 to 3-14, Comparative Examples 3-1 to 3-13]

The respective primer compositions obtained in Examples 1-1 to 1-14 and Comparative Examples 1-1 to 1-13 were applied by dip coating to a surface-cleaned polycarbonate resin sheet (thickness, 5 mm; product name: Takiron PC Clear 1600, from Takiron Co., Ltd.) such as to give a cured film thickness of about 5 to 10 µm and heat-cured at 130°C for 90 minutes, forming a primer layer.

The resulting test specimens were allowed to cool to room temperature, following which the silicone compositions in Tables 1-3 and 2-3 (HC-1 obtained in Synthesis Example 4 or HC-2 obtained in Synthesis Example 5) were applied onto the primer layer by dip coating such as to give a cured film thickness of about 5 to 10 µm and heat-cured at 120°C for 60 minutes, forming a silicon hardcoat layer.

Using the coated articles thus obtained as test specimens, the properties shown in (2) to (7) below were evaluated by the following methods. The results are presented in Tables 1-3 and 2-3.

### (2) Initial Film Appearance:

The test specimen was visually examined.

### (3) Transparency:

The haze (%) of the test specimen was measured with a haze meter (NDH2000, from Nippon Denshoku Industries Co., Ltd.

### (4) Primary Adhesion:

In accordance with JIS K5400, six lengthwise and six crosswise slits were made in the test specimen at 2 mm intervals with a razor blade, creating 25 squares. Cellotape^{®} (Nichiban Co., Ltd.) was firmly attached to the scored film, following which the tape was rapidly peeled off toward oneself at 90°. The number of squares (X) where the film remained without peeling off was indicated as X/25.

### (5) Water Resistance and Water-Resistant Adhesion:

The test specimen was immersed in boiling water for 2 hours, following which an adhesion test was carried out in the same way as in (4) above.

### (6) Abrasion Resistance:

In a Taber abrasion test in accordance with ASTM 1044, a CS-10F abrasion wheel was mounted on an abrasion tester and the haze of the cured film after 500 rotations under a load of 500 gf was measured. The abrasion resistance ΔHz (% points) was evaluated as (haze (%) after test) - (haze (%) before test).

### (7) Weather Resistance (SUV Accelerated Weathering Test):

The weather resistance was evaluated under the same conditions as those described in WO 2020/066993 A1. That is, the Super UV Tester (SUV), an accelerated weathering tester from Iwasaki Electric Co., Ltd., was used to carry out 1,080-hour (90-cycle) and 1,320-hour (110-cycle) tests, each cycle being 12 hours long and consisting of 4 hours of irradiation (irradiation intensity, 90 mW/cm²; black panel temperature, 63°C; 70% humidity), 4 hours of darkness (black panel temperature, 63°C; 90% humidity) and 4 hours of condensation (black panel temperature, 30°C; 95% humidity), following which the film was checked for the presence or absence of cracking and peeling. The weather resistance was evaluated according to the criteria shown below.

### [Film Cracking]

The film appearance following the weathering test was evaluated according to the following criteria.
⊚: Normal after 1,320 hours
○: Normal after 1,080 hours, but cracks present throughout film after 1,320 hours
×: Cracks present throughout film after 1,080 hours

### [Film Peeling]

The condition of the film following the weathering test was evaluated according to the following criteria.
⊚: Normal after 1,320 hours
○: Normal after 1,080 hours, but peeling exists throughout film after 1,320 hours
×: Peeling exists throughout film after 1,080 hours

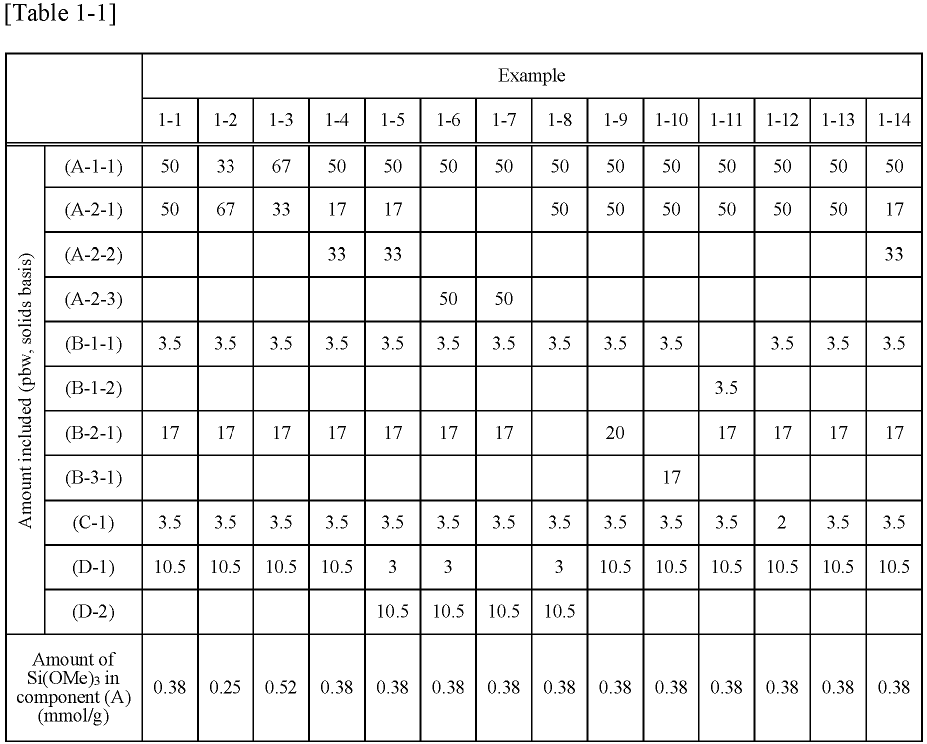

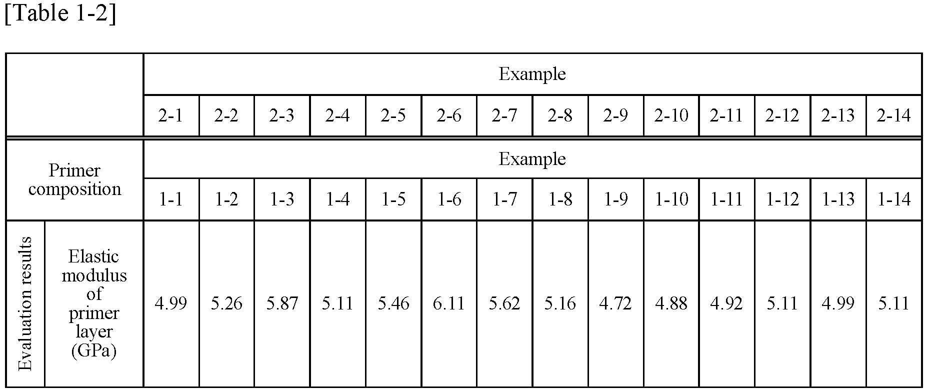

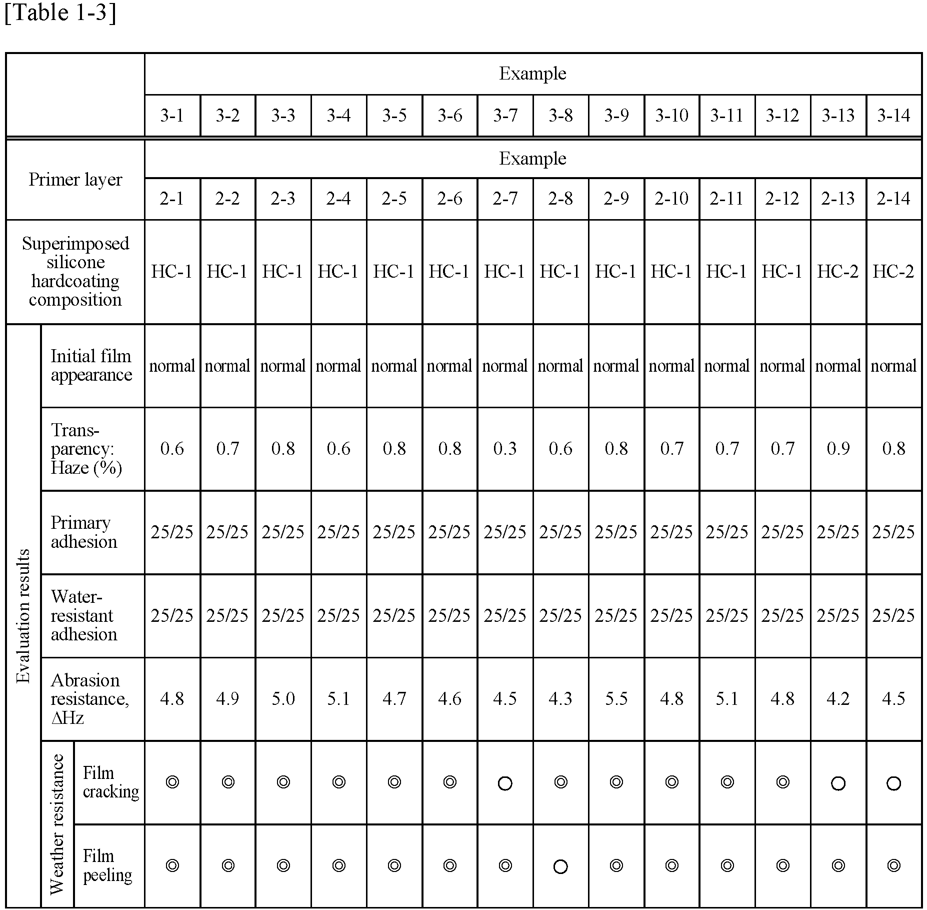

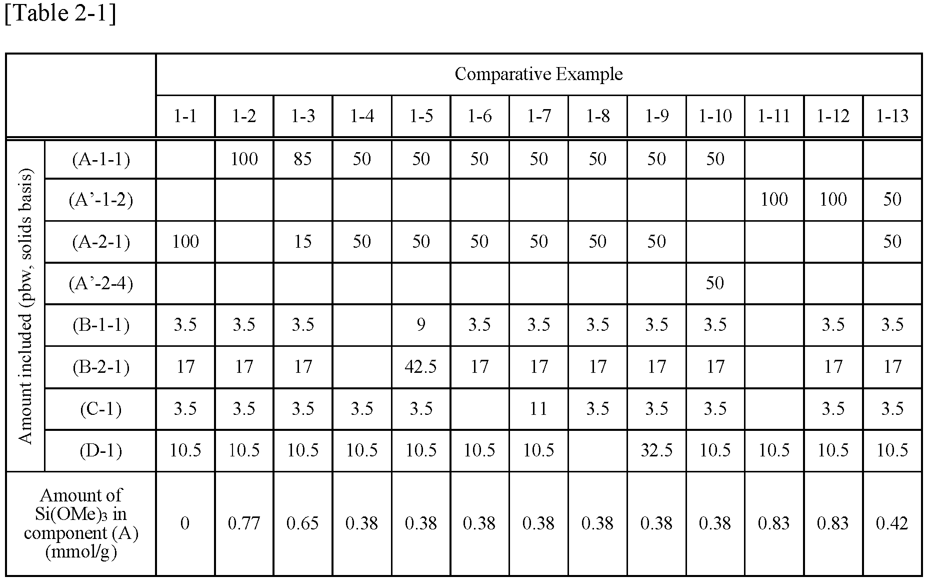

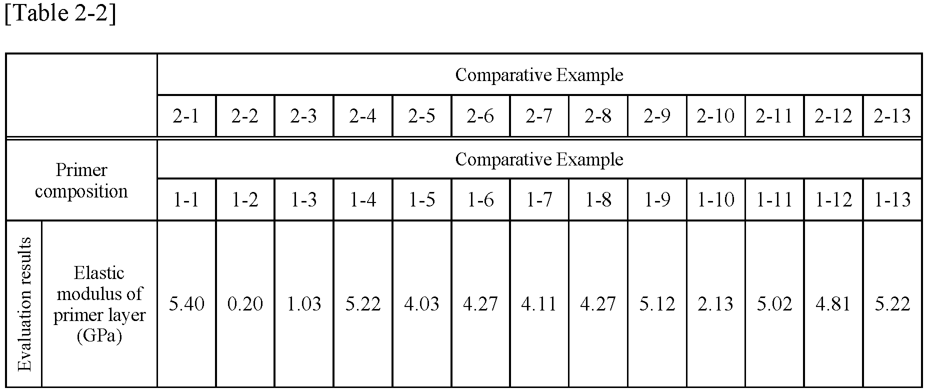

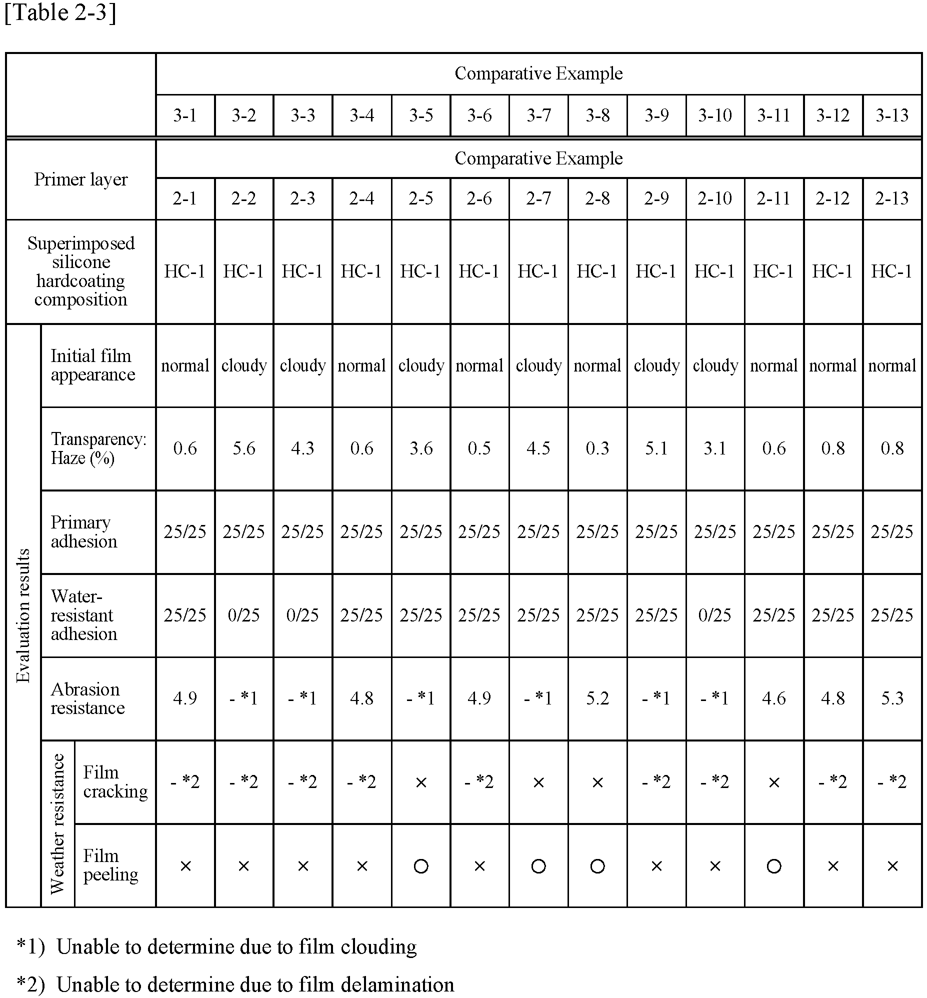

As shown in Table 1-3, it is clear that in the coated articles of Examples 3-1 to 3-14, the films had a good transparency and a good adherence to the polycarbonate substrate, and additionally had an excellent weather resistance.

On the other hand, as shown in Table 2-3, in Comparative Example 3-1 where the primer composition does not include component (A-1), in Comparative Example 3-4 where it does not include component (B) and in Comparative Example 3-6 where it does not include component (C), film peeling arose in the weathering test.

In Comparative Example 3-2 where the primer composition does not include component (A-2), in Comparative Example 3-3 where the content of component (A-2) is inadequate and in Comparative Example 3-10 where a vinyl copolymer having a low glass transition point was used instead of component (A-2), the film clouded. In addition, because the elastic modulus of the primer layer was smaller, the water-resistant adhesion worsened and film peeling arose in the weathering test.

In Comparative Example 3-15 where the amount of component (B) included in the primer composition was excessive and in Comparative Example 3-7 where the amount of component (C) was excessive, the film clouded and film cracking arose in the weathering test.

In Comparative Example 3-8 where the primer composition does not include component (D), film cracking arose in the weathering test. In Comparative Example 3-9 where the content of component (D) is excessive, the film clouded, in addition to which film peeling arose in the weathering test.

In Comparative Examples 3-11 to 3-13 which use vinyl copolymers to which an ultraviolet absorber is attached via chemical bonds, film cracking or film peeling arose in the weathering test and so the film had an inferior weather resistance.

## Claims

1. A primer composition comprising:
(A) a total of 100 parts by weight of components (A-1) and (A-2) below in a weight ratio (A-1) : (A-2) of from 3:1 to 1:3
(A-1) a copolymer which includes constitutional units (a) of formula (1) below and constitutional units (b) of formula (2) below, and does not include hydroxyphenyltriazine structures, benzophenone structures and benzotriazole structures 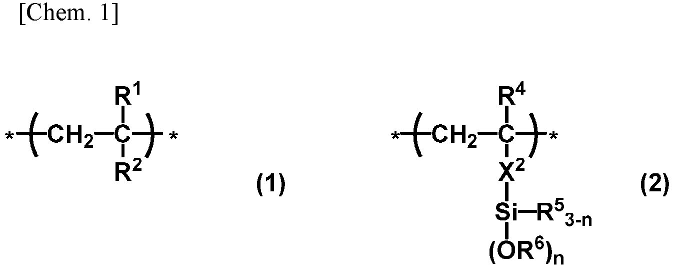 [wherein, in formula (1), R¹ is a hydrogen atom, a halogen atom or a methyl group; R² is a monovalent hydrocarbon group of 1 to 20 carbon atoms which may be substituted with a hydroxyl group, an amino group or an epoxy group and may have an ether bond, a cyano group, an amide group, or a -X¹-R³ group (X¹ being an oxygen atom, a carbonyl group, an oxycarbonyl group or a carbonyloxy group; and R³ being a hydrogen atom or a monovalent hydrocarbon group of 1 to 20 carbon atoms which may be substituted with a hydroxyl group, an amino group or an epoxy group and may have an ether bond),
in formula (2), R⁴ is a hydrogen atom or a methyl group; R⁵ and R⁶ are each independently a hydrogen atom, an alkyl group of 1 to 10 carbon atoms or an aryl group of 6 to 10 carbon atoms; X² is a single bond, an arylene group of 6 to 10 carbon atoms or an alkyleneoxycarbonyl group of 2 to 12 carbon atoms; and n is an integer from 1 to 3, and
an asterisk * denotes a bond to a neighboring constitutional unit]
(A-2) a vinyl (co)polymer which has no alkoxysilyl groups, does not include hydroxyphenyltriazine structures, benzophenone structures and benzotriazole structures, and has a glass transition point of 80°C or more;
(B) 1 to 30 parts by weight of one or more ultraviolet absorber selected from the group consisting of (B-1) hydroxyphenyltriazine compounds, (B-2) benzophenone compounds and (B-3) benzotriazole compounds;
(C) 0.5 to 7 parts by weight of a compound having a cyclic hindered amine structure;
(D) 3 to 20 parts by weight of inorganic particles having a median diameter as measured by the dynamic light scattering method of 100 nm or less; and
(E) a solvent in an amount such that the solids concentration in the composition is from 1 to 50 wt%.

2. The primer composition of claim 1, wherein the content of constitutional units (b) in component (A-1), based on the total weight of components (A-1) and (A-2), is from 0.2 to 0.6 mmol/g.

3. The primer composition of claim 1 or 2, wherein component (A-1) has a glass transition point of 30°C or below.

4. The primer composition of any one of claims 1 to 3, wherein the constitutional units (a) in component (A-1) include constitutional units of formula (3) below and constitutional units of formula (4) below, and the constitutional units (b) in component (A-1) include constitutional units of formula (5) below 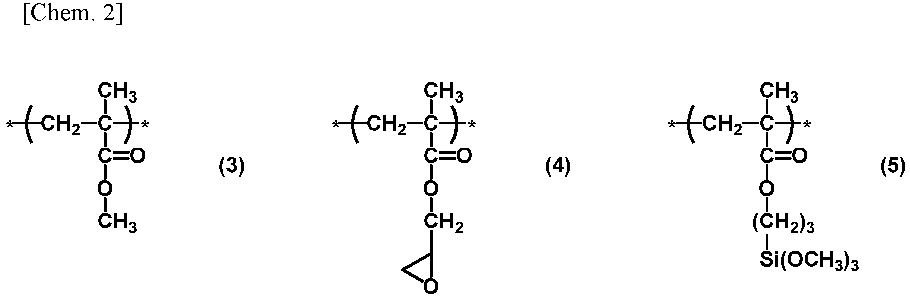 (wherein an asterisk * denotes a bond to a neighboring constitutional unit).

5. The primer composition of any one of claims 1 to 4, wherein component (B) includes component (B-1) in an amount of from 1 to 5 parts by weight per 100 parts by weight of components (A-1) and (A-2) combined.

6. The primer composition of any one of claims 1 to 5, wherein component (D) includes zinc oxide particles.

7. The primer composition of any one of claims 1 to 6, wherein component (D) includes silica particles.

8. A coated article comprising a substrate and a primer layer composed of a cured film of the primer composition of any one of claims 1 to 7 formed on at least one side of the substrate, either directly or over one or more other layer, wherein the primer layer has an elastic modulus of 1.5 GPa or more.

9. The coated article of claim 8, further comprising a silicone hardcoat layer on the primer layer.

10. The coated article of claim 9, wherein the silicone hardcoat layer is a cured film of a silicone hardcoating composition comprising:
(i) a silicone resin obtained by (co)hydrolytically condensing at least one compound selected from alkoxysilanes of general formula (6) below
(R⁷)ₘSi(OR⁸)₄₋ₘ (6)
(wherein each R⁷ is independently a hydrogen atom or a substituted or unsubstituted monovalent hydrocarbon group and a plurality of R⁷ may mutually bond to form a linked group, each R⁸ is independently an alkyl group of 1 to 3 carbon atoms, and m is 0, 1 or 2) and (partial) hydrolytic condensates thereof,
(ii) colloidal silica,
(iii) a curing catalyst, and
(iv) a solvent.

11. The coated article of claim 10, wherein the silicone hardcoating composition further comprises (v) an organic ultraviolet absorber.

12. The coated article of claim 11, wherein component (v) is an organic ultraviolet absorber having an alkoxysilyl group.

13. The coated article of claim 12, wherein component (v) is an organic ultraviolet absorber of general formula (7) below 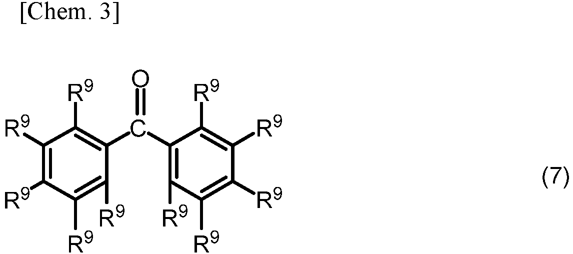
[wherein each R⁹ is independently a hydrogen atom, a hydroxyl group, an alkyl group of 1 to 5 carbon atoms or a group of general formula (8) below, with at least one occurrence of R⁹ being a group of general formula (8) below
* -O-(CH₂)-SiR¹⁰ₖ(OR¹¹)₃₋ₖ (8)
(wherein R¹⁰ and R¹¹ are each independently an alkyl group of 1 to 5 carbon atoms, j is an integer from 1 to 8, k is an integer from 0 to 2, and an asterisk * denotes a bond with a neighboring atom)].

14. The coated article of claim 10, wherein the silicone hardcoating composition further comprises (vi) an inorganic ultraviolet absorber.

15. The coated article of claim 14, wherein component (vi) is a core-shell type tetragonal titanium oxide solid solution having cores that are particles of a tin and manganese-doped tetragonal titanium oxide solid solution and having shells of silicon oxide outside the cores, the median diameter of the core-shell type tetragonal titanium oxide solid solution as measured by the dynamic light scattering method is 50 nm or less, the amount of tin in solid solution, expressed as a molar ratio with titanium (Ti/Sn), is from 10 to 1,000, and the amount of manganese in solid solution, expressed as a molar ratio with titanium (Ti/Mn) is from 10 to 1,000.

16. The coated article of any one of claims 8 to 15, wherein the substrate is an organic resin substrate.
